# EUROPÄISCHE PATENTSCHRIFT

(11) **EP 3 778 307 B1**
(45) Veröffentlichungstag und Bekanntmachung des Hinweises auf die Patenterteilung: **08.07.2026**
(21) Anmeldenummer: 20195096.1
(22) Anmeldetag: 16.07.2010
(51) Int. Cl.: B60R 13/07, E05F 15/73, E05F 15/76, E05B 81/76

(54) **MODULEINHEIT MIT SCHLAUFENFÖRMIGEM ODER U-FÖRMIGEM SENSOR**
MODULAR UNIT WITH LOOP-SHAPED OR U-SHAPED SENSOR
UNITÉ MODULAIRE POURVUE DE CAPTEUR EN BOUCLE OU EN U

(30) Priorität: 17.07.2009 DE 102009033738; 23.07.2009 DE 202010005427 U; 03.03.2010 DE 102010002560; 08.03.2010 DE 102010002671
(43) Veröffentlichungstag der Anmeldung: 17.02.2021
(62) Teilanmeldung aus: 16178047.3
(73) Patentinhaber: Huf Hülsbeck & Fürst GmbH & Co. KG, 42551 Velbert (DE)
(72) Erfinder: Eggers, Thomas, 42929 Wermelskirchen (DE); Heller, Norbert, 41749 Viersen (DE); Buss, Wolfgang, 42697 Solingen (DE)
(74) Vertreter: Bals & Vogel Patentanwälte PartGmbB

(56) Entgegenhaltungen:
- JP-A- 2005 134 178
- US-A1- 2003 128 116
- US-A1- 2003 216 817
- US-A1- 2009 120 001
- US-B2- 7 300 190

## Beschreibung

Die Erfindung bezieht sich u. a. auf eine Moduleinheit mit einer Sensoreinrichtung für eine Betätigung eines beweglichen Teils, insbesondere einer Klappe eines Kraftfahrzeugs, mit einem Trägerkörper, an dem die Sensoreinrichtung mit wenigstens einem Sensor angeordnet ist, um eine Detektion eines Objektes in wenigstens einem an das Kraftfahrzeug angrenzenden Detektionsbereich zu ermöglichen, sodass über die Detektion die Betätigung des beweglichen Teils aktivierbar ist. Die Betätigung erfolgt vorzugsweise berührungslos. Die Erfindung ist auch auf ein Betätigungsverfahren gerichtet.

Zur berührungslosen Betätigung von beweglichen Teilen eines Kraftfahrzeugs sind Sensoreinrichtungen bekannt, die das Vorhandensein und insbesondere die Bewegung einer Person sensieren, um darin den Wunsch zur Öffnung des beweglichen Teils des Kraftfahrzeugs zu erkennen. Das bewegliche Teil des Kraftfahrzeugs kann eine Klappe und insbesondere eine Heckklappe oder eine Seitentür oder Motorhaube des Kraftfahrzeugs betreffen, wobei auch bewegliche Fensterelemente bekannt sind, wie etwa eine in einer Heckklappe bewegbare Heckscheibe, die dann durch eine gattungsbildende Sensoreinrichtung vorteilhaft geöffnet oder geschlossen werden kann, wenn eine manuelle Betätigung der Heckklappe nicht oder nur erschwert möglich ist. Im Folgenden wird das bewegliche Teil vereinfachend als Klappe bezeichnet.

Das durch die Sensoreinrichtung detektierte Objekt kann eine Person sein, die sich dem Kraftfahrzeug in der Absicht nähert, die Heckklappe zu öffnen. Die Betätigung der Heckklappe beschreibt dabei sowohl einen Öffnungsvorgang, beispielsweise wenn die Person einen Gegenstand beidhändig in den Kofferraum einlegen möchte, oder die Betätigung der Heckklappe betrifft einen Schließvorgang der Heckklappe, wenn die Person beidhändig einen Gegenstand aus dem Kofferraum entnommen hat, um anschließend die Heckklappe zu schließen. Ein entsprechender Sensor ist z. B. aus JP 2005 134178 A bekannt.

Die bekannte Sensoreinrichtung umfasst dabei wenigstens einen Sensor, der über einen Trägerkörper am Kraftfahrzeug angeordnet ist. Die Sensoren zur Heckklappenbetätigung sind gewöhnlich innenseitig im Stoßfänger angebracht, so dass der Trägerkörper durch den Stoßfänger selbst gebildet ist. Dabei ist bekannt, die Sensoren innenseitig auf der Oberfläche des Stoßfängers aufzukleben oder zu laminieren, wobei die Sensoren als kapazitiv wirkende Elektroden drahtartig oder folienartig ausgebildet sind. Dabei werden die Drähte oder Folien der durch Elektroden gebildeten Sensoren wenigstens über einen Teil oder bevorzugt über der gesamten Breite des Stoßfängers des Kraftfahrzeugs angebracht. Folglich ist eine Betätigung der Heckklappe des Kraftfahrzeugs aus verschiedenen Bereichen in der näheren Umgebung des Hecks des Kraftfahrzeugs möglich. Damit sind die Sensoren Bestandteil des hinteren Stoßfängers, die innenseitig im Stoßfänger aufgeklebt oder mit Befestigungsmitteln am Stoßfänger befestigt sind. Insbesondere ist bekannt, die Sensoren bereits im Kunststoff-Spritzgussprozess zur Herstellung des Stoßfängers einzusetzen, um ein einteiliges Bauteil mit umspritzten Sensoren zu erhalten.

Es hat sich nachteiligerweise gezeigt, dass der Montageaufwand derartiger Sensoreinrichtungen groß ist.

Die Aufgabe der vorliegenden Erfindung ist es, eine Moduleinheit mit einer oben beschriebenen Sensoreinrichtung zu schaffen, die auf einfache und montagefreundliche Weise am Kraftfahrzeug befestigbar ist.

Diese Aufgabe wird durch eine Moduleinheit mit allen Merkmalen des Anspruches 1 gelöst. Vorteilhafte Weiterbildungen der Erfindung sind in den abhängigen Ansprüchen angegeben.

Ein wesentlicher Kern der vorliegenden Erfindung ist es, dass ein einzeln handhabbares Modul geschaffen wird, welches auf einfache Weise am Kraftfahrzeug, insbesondere am Heckbereich befestigt werden kann.

Hierbei sind vorzugsweise entsprechende Befestigungselemente an der Moduleinheit vorgesehen, mit denen die Moduleinheit am Kraftfahrzeug zuverlässig angeordnet werden kann. Hierbei kann die Moduleinheit form-, kraft- und/oder stoffschlüssig mit einem kraftfahrzeugseitigen Teil befestigt werden. Beispielsweise ist es denkbar, dass die Moduleinheit an einem Kraftfahrzeugteil verrastet, angeklipst oder eingeschoben wird. Eine Klebverbindung ist ebenfalls denkbar. Die Moduleinheit, insbesondere der Trägerkörper, bestehen zumindest teilweise aus Kunststoff.

Die Sensoren sind kapazitive Sensoren.

Hierbei ist es wesentlich, dass eine mit der Sensoreinrichtung verbundene Elektrikeinheit in Form einer Steuereinheit am Trägerkörper angeordnet ist.

Diese Elektrikeinheit kann die von den Sensoren übermittelten Signale einer Hauptelektrikeinheit weitergeben, die kraftfahrzeugseitig angeordnet ist. In einer möglichen Ausführungsform der Erfindung kann die Elektrikeinheit kabellos Signale der kraftfahrzeugseitigen Hauptelektrikeinheit übermitteln. In einer denkbaren Ausführungsform der Erfindung kann die Elektrikeinheit der Moduleinheit gleichzeitig als Hauptelektrikeinheit des Kraftfahrzeuges wirken. Die Sensoreinrichtung kann in einer möglichen Ausführungsform in der Elektrikeinheit integriert sein.

Vorteilhafterweise weist die Sensoreinrichtung mindestens einen ersten und einen zweiten Sensor auf, wobei die Sensoren unterschiedliche Detektionsbereiche aufweisen, wobei insbesondere die unterschiedlichen Detektionsbereiche unterschiedlich groß sind. Die Moduleinheit kann derart ausgeführt sein, dass mindestens ein Sensor eine seitliche Anordnung am Kraftfahrzeug aufweist, das bedeutet nicht an der Heckpartie des Kraftfahrzeuges angeordnet ist, sondern an einem Seitenbereich des Kraftfahrzeuges.

Ebenfalls ist es denkbar, dass der Trägerkörper am Kraftfahrzeug formschlüssig, kraftschlüssig und/oder stoffschlüssig befestigbar ist, wobei insbesondere der Trägerkörper über eine Rastverbindung am Kraftfahrzeug befestigbar ist oder am Kraftfahrzeug einschiebbar ist. Das entsprechende kraftfahrzeugseitige Teil, an dem der Trägerkörper angeordnet ist, kann mit entsprechenden Befestigungselementen ausgeführt sein, die mit den Befestigungselementen des Trägerkörpers zur zuverlässigen Fixierung zusammenwirken.

Vorzugsweise weist der Sensor eine längliche Erstreckung auf, wobei insbesondere der Sensor flexibel ausgeführt ist. Eine der Vorteile einer flexiblen Sensoreinrichtung ist, dass sich hierdurch Vorteile bei der Montage ergeben.

Die Sensoreinrichtung und die Elektrikeinheit sind form- und/oder kraftschlüssig am Trägerkörper befestigt. Um eine zuverlässige Detektion eines Objektes zu gewährleisten, weist die Sensoreinrichtung eine Erstreckung auf, die in Breitenrichtung des Kraftfahrzeuges verläuft, wobei insbesondere die Sensoren zueinander im Wesentlichen parallel verlaufen.

Um die Montagefreundlichkeit weiter zu erhöhen, können Positionierungsmittel vorgesehen sein, um eine eindeutige Befestigung des Trägerkörpers am Kraftfahrzeug zu gewährleisten. Die Positionsmittel können beispielsweise am Trägerkörper angeformte Aussparungen oder Einsparungen sein, die nur in einer Position am zu befestigenden Bauteil des Kraftfahrzeuges angeordnet werden können. Somit wird gewährleistet, dass die am Trägerkörper angeordneten Sensoren auch die gewünschte Position zur zuverlässigen Detektion eines Objektes im Bereich des Kraftfahrzeuges aufweisen.

Vorzugsweise weist die Elektrikeinheit eine Platine auf, auf der die Sensoren angeordnet sind, wobei insbesondere die Platine mit den Sensoren innerhalb einer Vergussmasse integriert sind.

Vorzugsweise weist der Trägerkörper eine Aufnahme auf, in der sich die Elektrikeinheit sich befindet, insbesondere ein Deckelelement abdichtend die Aufnahme verschließt. Das Deckelelement kann beispielsweise mit einer entsprechenden Dichtung ausgeführt sein, so dass kein Schmutz, Feuchtigkeit etc. in die Aufnahme gelangt und somit die Funktionsfähigkeit der Elektrikeinheit gestört wird.

Erfindungsgemäß ist ein Überprüfungsmodul vorgesehen, das die Funktionsweise der Sensoreinrichtung überprüft. Das Überprüfungsmodul befindet sich in der Nähe des jeweiligen Sensors, wobei das Überprüfungsmodul am Trägerkörper befestigt ist.

In einer weiteren Ausgestaltung der Moduleinheit kann ein von außen zugänglicher Notschalter vorgesehen sein, der über eine taktile Aktion des Benutzers aktivierbar ist. Falls die Moduleinheit oder die Sensoreinrichtung in ihrer Funktionsweise gestört ist, kann über eine Berührung des Notschalters ebenfalls ein Signal ausgelöst werden, welches eine Betätigung des beweglichen Teils aktivieren kann.

Die Aktivierung des beweglichen Teils nach einer positiven Detektion durch die Sensoreinrichtung bedeutet, dass das bewegliche Teil aus seiner geschlossenen Position in seine offene Position und umgekehrt bewegt werden kann. Hierbei ist jedoch zu berücksichtigen, dass erst eine Betätigung des beweglichen Teils, das bedeutet eine Bewegung des beweglichen Teils, in seine Offenposition und/oder Schließposition erst dann erfolgt, wenn zusätzlich eine positive Authentifizierung mit dem Objekt stattgefunden hat. Diese Authentifizierung erfolgt in der Regel über einen ID-Geber, den die berechtigte Person mit sich trägt. Der ID-Geber weist hierbei einen entsprechenden Identifikationscode auf, der fahrzeugseitig zur Authentifizierung überprüft wird. Erst bei einer positiven Authentifizierung erfolgt eine entsprechende Betätigung des beweglichen Teils.

In einer möglichen Ausgestaltung kann die Energieversorgung der Elektrikeinheit induktiv erfolgen. Beispielsweise weist die Elektrikeinheit ein Spulenelement auf, welches mit einem Gegenspulenelement zusammenwirkt und eine entsprechende Energieversorgung der Elektrikeinheit induktiv bereitgestellt werden kann.

Bei einer möglichen Variante kann eine Leuchteinheit vorgesehen sein, die insbesondere während der Detektion aktiviert ist. Hierbei ist es denkbar, dass die Leuchteinheit über eine definierte Leuchtweise dem Benutzer eine Rückmeldung gibt. Beispielsweise können Blinker oder Heckleuchten als Leuchteinheit dienen, die während oder nach erfolgreicher Detektion und/oder Authentifikation leuchten oder blinken. Ebenfalls kann zusätzlich oder alternativ ein akustisches Signal eine entsprechende Rückmeldung während oder nach erfolgreicher Detektion und/oder Authentifikation dem Benutzer geben.

Eine verbessernde Maßnahme kann vorsehen, dass eine Schwellwertregelung vorgesehen ist, die eine tatsächliche Berührung des Benutzers am beweglichen Teil erkennt. Falls sich der Benutzer unmittelbar am beweglichen Teil anlehnt bzw. dieses Teil berührt, ohne eine tatsächliche Betätigung des beweglichen Teils aktivieren zu wollen, erkennt dieses die Schwellwertregelung, so dass ein Öffnungsvorgang des beweglichen Teils nicht aktiviert wird.

Ebenfalls ist es denkbar, dass mindestens ein Sensor zwischen dem Trägerkörper und dem kraftfahrzeugseitigem Bauteil angeordnet ist, wobei insbesondere der Trägerkörper mit einem Profil, das zum kraftfahrzeugseitigen Bauteil gerichtet ist, ausgeführt ist und dem Sensor eine bestimmte Einbaulage bietet, die insbesondere zur Außenseite abgedichtet ist.

Ferner ist es denkbar, dass die Elektrikeinheit über Halteelemente form- und/oder kraftschlüssig mittels Gegenhalteelementen am Trägerkörper der Moduleinheit befestigt werden kann. Diese Halteelemente können als Rastelemente oder Clipselemente oder dergleichen ausgestaltet sein, um somit sicher die Elektrikeinheit, insbesondere die Steuereinheit, an dem Fahrzeug bzw. dem Trägerkörper der Moduleinheit zu befestigen. Hierbei ist es beispielsweise denkbar, dass die Halteelemente an dem Gehäuse der Elektrikeinheit integriert sind, um zum Beispiel mit dem Fahrzeug mechanisch zusammenwirken zu können. Auch ist es denkbar, dass die Halteelemente an dem Fahrzeug, insbesondere dem Stoßfänger, dem Türschweller oder dergleichen bzw. dem Trägerkörper der Moduleinheit integriert sind. Diese Halteelemente arbeiten mit Gegenhalteelemente an dem anderen Element zusammen. Dabei kann die Elektrikeinheit zum Beispiel hängend oder stehend über die Halteelemente mit dem Fahrzeug direkt oder indirekt befestigt werden. Auch ist es denkbar, dass zusätzlich zu den vorgesehenen Halteelementen, Pufferelemente vorgesehen sind, mit denen sich die Elektrikeinheit an dem fahrzeugseitigen Element oder dem Trägerkörper der Moduleinheit abstützt und die einen wesentlichen Teil der Gewichtskraft der Elektrikeinheit aufnehmen. Durch diese Pufferelemente können Toleranzen und Schwingungen, die unweigerlich bei einem Fahrzeug entstehen, abgefedert und/oder gedämpft werden, um die Elektrikeinheit vor mechanischen Einflüssen weitestgehend zu schützen. Ebenfalls kann es vorgesehen sein, dass die Halteelemente mit den Pufferelementen integriert sind, um somit die Elektrikeinheit am Fahrzeug bzw. am Trägerkörper der Moduleinheit zu befestigen. Ferner ist es denkbar, dass auch nur die Pufferelemente genutzt werden, um die Elektrikeinheit zu befestigen, wobei hierbei vorteilhafterweise die Pufferelemente formschlüssig mit den entsprechenden Gegenelementen am Fahrzeug oder an dem Trägerkörper zusammenwirken. Sowohl die Halteelemente als auch die Pufferelemente können direkt am Gehäuse angespritzt, angeschweißt, angeklebt, geschraubt oder anderweitig befestigt werden, um somit die Elektrikeinheit sicher am Fahrzeug unterzubringen. Entsprechende Gegenelemente, die zum Beispiel aus einer Bohrung bestehen können, oder ebenfalls aus Rastelementen, können genauso wie die Halteelemente beispielsweise am Stoßfänger, Türschweller bzw. Trägerkörper der Moduleinheit oder dergleichen befestigt werden. Die Halteelemente können zusätzliche Metallclips aufweisen, oder Schraubelemente oder dergleichen, die zur Befestigung der Elektrikeinheit dienen.

Vorteilhafterweise kann im Rahmen der Moduleinheit eine Sensoreinrichtung für eine Betätigung eines beweglichen Teils, insbesondere einer Klappe eines Kraftfahrzeuges, bereitgestellt werden, die eine sichere Handhabung bzw. Betätigung des beweglichen Teils ermöglicht und kostengünstig herstellbar ist.

Dabei kann eine Sensoreinrichtung für eine Betätigung eines beweglichen Teils, insbesondere einer Klappe eines Kraftfahrzeuges, mit wenigstens einem Sensor vorgesehen sein, um eine Detektion eines Objektes in wenigstens einem an das Kraftfahrzeug angrenzenden Detektionsbereich zu ermöglichen, so dass über die Detektion die Betätigung des beweglichen Teils aktivierbar ist, wobei der Sensor als kapazitiver Sensor ausgestaltet ist. Hierbei können auch sämtliche technische Merkmale für die Sensoreinrichtung vorgesehen sein, die zur Sensoreinrichtung bei der Moduleinheit bereits aufgeführt worden sind oder bei der Sensoreinrichtung bei dem Verfahren offenbart werden.

Wie bereits erwähnt, kann zumindest ein Sensor als ein Draht oder einer Leiterfolie ausgestaltet sein, die insbesondere über eine längliche Erstreckung verfügt. Ebenfalls ist es denkbar, dass zumindest ein Sensor folienartig oder flächenförmig ausgebildet ist, wobei insbesondere die längliche Erstreckung deutlich größer ausgestaltet ist als die Breite des entsprechenden Sensors. Wie bereits erwähnt, kann der Sensor am Kraftfahrzeug im Stoßfängerbereich oder im Türschwellerbereich bzw. unterem Türbereich der Seitentüren angeordnet sein. Hierzu kann der Trägerkörper aus der Moduleinheit genutzt werden. Auch ist es denkbar, dass sich dieser Sensor über die ganze Breite oder nur einem Teilbereich der Breite des Stoßfängers bzw. Türschwellers erstreckt. Auch ist es denkbar, dass mehrere Sensoreinrichtungen bzw. mehrere Moduleinheiten bei einem Kraftfahrzeug eingesetzt werden, um z. B. die Seitentüren, die Kofferraumklappe und/oder den Motorraumdeckel als bewegliches Teil zu betätigen. Hierbei kann zumindest ein Sensor auch direkt an dem beweglichen Teil angeordnet sein. Diese Anordnung ist besonders an den Seitentüren interessant, da hier wenig Platz besteht, um die Sensoreinrichtung an der feststehenden Karosserie des Kraftfahrzeuges anzuordnen.

Die Anbringung eines Sensors in oder an dem beweglichen Teil weist zusätzlich die Möglichkeit auf, dass das bewegliche Teil dem Objekt im Detektionsbereich folgen kann, in dem ein Antrieb für das bewegliche Teil durch die Sensoreinrichtung gesteuert wird. Somit ist es möglich, dass z. B. die Seitentür durch beispielsweise eine Hand oder ein Fuß (das Objekt) des Bedieners selbstständig geöffnet wird, in dem er nur die Hand versucht aus dem Detektionsbereich des Sensors zu entfernen, wobei der Sensor diese Bewegung erfasst und den Antrieb anweist, das bewegliche Teil dem Objekt zu folgen, damit es in dem Detektionsbereich des Sensors verbleibt.

Um die Handhabung der Sensoreinrichtung zur Betätigung des beweglichen Teils möglichst zu vereinfachen, sollte der Detektionsbereich der Sensoren nicht in den Schwenkbereich der beweglichen Klappe ragen, da es hierbei zu Kollisionen mit dem zu erfassenden Objekt kommen kann. Es sei denn, der entsprechende Sensor dient dazu, das bewegliche Teil dem Objekt folgen zu lassen, wie zuvor beschrieben worden ist.

Ferner kann es vorgesehen sein, dass die Sensoreinrichtung mit wenigstens einem Sensor zunächst eine Referenzmessung durchführt, um somit Störeinflüsse, wie Witterung, Hindernisse oder dergleichen zunächst zu erfassen. Dieser Referenzmesswert kann in der Elektrikeinheit, insbesondere in der Steuereinheit, als Referenzwert gespeichert werden. Nachdem die Referenzmessung durchgeführt worden ist, kann dann der Sensor eine Detektion eines Objektes in dem Detektionsbereich messtechnisch erfassen. Auf diese Art und Weise können Fehlfunktionen bei der Betätigung des beweglichen Teils zuverlässig vermieden werden. So ist es z. B. denkbar, dass die Sensoreinrichtung bei oder kurz nachdem Parkvorgang die erwähnte Referenzmessung durchführt, um beispielsweise Gegenstände im Detektionsbereich zu erfassen, die später bei einer gewünschten Betätigung der beweglichen Klappe zu Messfehler führen könnten. Auch kann diese Referenzmessung zur Festlegung von Schwellwerten bei der anschließenden Messung genutzt werden. Es sei an dieser Stelle erwähnt, dass es optional möglich ist, die Sensoreinrichtung über einen zusätzlichen Schalter im Fahrzeug ein- bzw. auszuschalten. Auch kann die Aktivierung der Sensoreinrichtung von der fahrzeugseitigen Elektronik gesteuert werden, z. B. über das Lenkradschloss oder den Anlassschalter oder einem Schalter am Ganghebel oder dergleichen.

Ebenfalls ist es möglich, dass zumindest ein Sensor oder alle Sensoren der Sensoreinrichtung auf fehlerhafte Steckverbindungen, Lötverbindungen oder Leitungsbrüche hin überwacht werden. Zu diesem Zweck kann z. B. ein Sensor mit einem Endwiderstand ausgestattet sein, der am Ende der Sensorelektrode angeordnet ist. Durch eine Vergleichmessung kann somit festgestellt werden, ob der Widerstand messtechnisch noch erreichbar ist oder nicht. Wird hierbei der Endwiderstand nicht mehr detektiert, so ist davon auszugehen, dass an irgendeiner Stelle ein Defekt bzw. Bruch des Sensors vorliegt, der z. B. als Fehler von dem Steuergerät erfasst und weiter an die Kraftfahrzeugelektronik gemeldet werden kann.

Auch ist es der zumindest eine Sensor als durchgehender Leiter ausgestaltet und weist somit kein abschließendes Ende auf, wobei dann der Gesamtwiderstand des Sensors eindeutig messtechnisch vom Überprüfungsmodul erfassbar ist. Überschreitet dieser Gesamtwiderstand des mindestens einen Sensors ein vorgegebenen Widerstandswert, so ist hierdurch eindeutig auf einen elektrischen Defekt des Sensors zu schließen. Um trotzdem zu vermeiden, dass der entsprechende Sensor an zwei unterschiedlichen Stellen leitungstechnisch verbunden werden muss, ist das Sensorelement schlaufenförmig oder U-förmig ausgestaltet, so dass der Eingangsanschluss und der Ausgangsanschluss des Sensorelementes nebeneinander angeordnet sind.

Auch ist es denkbar, dass zumindest ein Sensor mit einem Abschirmelement ausgestattet ist. Dieses Abschirmelement kann als Abschirmfolie um den Sensor teilweise gewickelt werden, um somit den Detektionsbereich des Sensors genauer zu definieren. An den Freistellen des Sensors, die nicht von der Abschirmfolie umhüllt bzw. verdeckt sind, ist dann der Detektionsbereich des Sensors geometrisch vorgegeben. So kann beispielsweise ein über die komplette Breite eines Kraftfahrzeuges ausgestalteter Sensor durch das Abschirmelement nur auf die Eckbereiche des Kraftfahrzeuges (Übergang von Heckbereich zum Seitenbereich) gerichtet werden. Zusätzlich ist es denkbar, dass zu einem oder jedem Sensor ein sogenanntes Active-Shield zum Einsatz kommt, um den Detektionsbereich vom Active-Shield weg nach vorne zu richten. Somit ist der jeweilige Sensor zwischen seinem Detektionsbereich und seinem Active-Shield angeordnet. Der jeweilige Sensor kann mit dem Abschirmelement und/oder dem Active-Shield teilweise oder ganz kunststoff- oder gummiumhüllt sein. Die Umhüllung des Sensors kann beispielsweise durch ein Spritz- oder Stranggussverfahren erfolgen. Somit bildet der entsprechende Sensor mit seinem Abschirmelement und/oder seinem Active-Shield ein unzertrennbares Bauteil. Ebenfalls kann auch der Sensor separat zu seinem Abschirmelement und/oder seinem Active-Shield angeordnet werden.

Der Sensor kann ebenfalls durch eine Matte oder ein Netz direkt oder indirekt an dem Trägerteil der Moduleinheit befestigt werden, wobei der Sensor in der Matte oder dem Netz ganz oder teilweise angebettet ist. Die Matte oder das Netz kann dann wiederum indirekt über weitere Haltelemente, insbesondere Rastelemente oder Klipse - wie beschrieben - befestigt werden. Im Bereich der Klipse kann eine zusätzliche Anbindung erfolgen zur verbesserten Sensierung.

Ebenfalls ist es denkbar, dass bei der Sensoreinrichtung ein erster Sensor mit einem ersten horizontalen Detektionsbereich und wenigstens ein zweiter Sensor mit einem zweiten vertikalen Detektionsbereich am Kraftfahrzeug vorgesehen ist, um somit nicht nur den Eintritt des Objektes in den Detektionsbereich eines Sensors zu erfassen, sondern auch die entsprechende Bewegung des Objektes. Durch den Einsatz von mindestens zwei Sensoren der Sensoreinrichtung können auch zwei aufeinander folgende unterschiedliche Richtungen des Objektes in den jeweiligen Detektionsbereichen festgestellt werden.

Um zusätzlich die Messgenauigkeit oder Messmöglichkeiten der Sensoreinrichtungen zu verbessern, kann es vorgesehen sein, dass zumindest eine kapazitive Kopplung eines Sensors veränderbar ist. Ebenfalls ist es denkbar, dass auch die kapazitive Kopplung der weiteren Sensoren veränderbar ausgestaltet ist oder diese erst nach einer Änderung eines ersten Sensors erfolgt. Hierbei kann auch die kapazitive Änderung über einen Schwellwert geregelt werden, so dass z. B. der erste Sensor zwar auslöst aber der zweite Sensor erkennt, dass bereits das Objekt in seinem Detektionsbereich eingetreten ist aber noch nicht vollständig darin vorhanden ist. Somit kann die Betätigung des beweglichen Teils auch gezielt über einen nur teilweisen Eintritt des Objektes in den Detektionsbereich eines Sensors gesteuert werden.

Es sei an dieser Stelle erwähnt, dass z. B. ein Zugangsberechtigungssystem und/oder ein Sicherheitssystem erst dann angesteuert wird, wenn zumindest ein Sensor der Sensoreinrichtung ein Objekt in seinem Detektionsbereich wahrnimmt. Ebenfalls kann die Ansteuerung des Zugangsberechtigungssystems oder des Sicherheitssystems erst dann erfolgen, wenn sichergestellt wird, dass dieses Objekt tatsächlich ein Zugang zum Fahrzeug wünscht. Dieses kann beispielsweise über die erfolgreiche Erfassung eines Bewegungsablaufes des Objektes stattfinden oder in dem zwei oder mehrere Sensoren das Objekt im Detektionsbereich erfassen. Somit ist es auch denkbar, dass die Ansteuerung des Zugangsberechtigungssystems und/oder des Sicherheitssystems erst dann erfolgt, wenn der Messwert eines Sensors unter einem vorgegebenen Schwellwert fällt bzw. fallen wird.

Üblicherweise wird der Zugang zum Fahrzeug erst dann freigegeben, wenn das Zugangsberechtigungssystem und/oder das Sicherheitssystem mit einem mobilen ID-Geber eine erfolgreiche Sicherheitsabfrage zum Zugangscode durchgeführt hat. Genau diese Abfrage kann jedoch von dem Messergebnis der Sensoreinrichtung abhängig gemacht werden, wie zuvor beschrieben.

Ebenfalls ist es vorstellbar, dass zumindest ein Sensor der Sensoreinrichtung als Antenne oder als zusätzliche Antenne für das Zugangsberechtigungssystem und/oder das Sicherheitssystem dient. Die Abfrage des Zugangsberechtigungssystems, beispielsweise über den mobilen ID-Geber oder eine Keyless-Go-Card, kann muss aber jedoch nicht dazu dienen, die Sensoreinrichtung zu aktivieren. Vielmehr kann auch die Sensoreinrichtung dazu dienen, das Zugangsberechtigungssystem und/oder das Sicherheitssystem aufzuwecken. Die zusätzliche Abfrage des ID-Gebers stellt lediglich eine weitere Verbesserung der Sicherheit dar, um ein unberechtigtes Öffnen des beweglichen Teils am Kraftfahrzeug zu verhindern.

Es sei der vollständigkeitshalber noch erwähnt, dass die Detektion eines Objektes sowohl bei einem verriegelten Kraftfahrzeug als auch bei einem geöffneten Kraftfahrzeug erfolgen kann.

Ebenfalls kann über die Sensoreinrichtung eine Betätigung der Kameravorrichtung, insbesondere der Heckkameravorrichtung gesteuert bzw. aktiviert werden, um beispielsweise mechanische Kollisionen des Fahrzeuges oder auch nur des beweglichen Teils beim Öffnungsvorgang mit einer Umgebung zu vermeiden. Ebenfalls ist es denkbar, dass auch andere technische Mittel zur zuvor genannten Kamera vorgesehen sind, um eine Kollision des beweglichen Teils beim Öffnen oder Schließen mit einem Hindernis oder Gegenstand zu verhindern. Hierbei kann es sich beispielsweise auch um einen weiteren Näherungssensor, ein Radarsystem oder einen Ultraschallsensor oder dergleichen handeln. Somit ist sichergestellt, dass der Öffnungs- oder Schließvorgang des beweglichen Teils - beispielsweise erst nach einer möglichen Authentifikation - erfolgt, wenn sichergestellt ist, dass kein Gegenstand oder Hindernis im Bewegungsbereich des beweglichen Teils vorhanden ist. Dieses kann insbesondere bei niedrigen Garagen von besonderer Bedeutung sein. Auch kann die Sensoreinrichtung zur Erfassung von Bodenvertiefungen und - erhöhungen im Detektionsbereich seiner Sensoren dienen, um Kollisionen des Fahrzeuges zu vermeiden. Die Messergebnisse der Sensoren können z. B. als Warnhinweise im Kraftfahrzeug an die Insassen ausgegeben werden.

Auch ist es denkbar, dass zumindest ein Sensor der Sensoreinrichtung genutzt wird, um festzustellen, ob sich ein Objekt, insbesondere eine Person im Bewegungsbereich des beweglichen Teils befindet. Erst wenn durch den Sensor sichergestellt ist, dass kein Objekt erfasst wird, kann somit die Ansteuerung des beweglichen Teils durch die Elektronikeinheit, insbesondere Steuereinheit, freigegeben werden, um das bewegliche Teil zu betätigen. Hierbei kann die Einklemmgefahr wirkungsvoll reduziert werden. Selbstverständlich können dazu auch die weiteren fahrzeuginternen Sensorsysteme, wie z.B. das Parksystem, das Abstandswarnsystem oder dergleichen genutzt werden, um festzustellen, dass eine gefährdete Person außerhalb des Gefahrenbereichs des beweglichen Teils vorhanden ist.

Ferner ist es denkbar, dass ein Sensor der Sensoreinrichtung mittels Halteelementen an dem Fahrzeug, insbesondere an der Innenseite des Stoßfängers oder des beweglichen Teils bzw. am Türschwellerbereich, angeordnet sein. Die Halteelemente können selbst als Klipse oder Rastelemente ausgestaltet sein. Die Klipse selbst können ebenfalls anklebbar ausgestaltet sein, um z. B. den Sensor stoffschlüssig zu halten. Auch können formschlüssige Schlaufen oder Haltemittel an den Klipsen zur Befestigung des Sensors vorgesehen sein.

Grundsätzlich kann zumindest ein Sensor über den Trägerkörper zu der Moduleinheit verbunden werden. Ebenfalls ist es denkbar, dass für jeden Sensor ein gesonderter Trägerkörper vorhanden ist, um die Moduleinheit zu bilden. Selbstverständlich können auch an einem Trägerkörper mehrere Sensoren nebeneinander, parallel oder hintereinander angeordnet sein. Auch ist es denkbar, dass zumindest ein Sensorelement außerhalb der Moduleinheit angeordnet ist, wobei hingegen ein anderer Sensor an dem Trägerelement der Moduleinheit vorgesehen ist.

Grundsätzlich kann zumindest ein Sensor mäanderförmig oder schlaufen- bzw. schleifenförmig angeordnet sein, um sein Detektionsbereich zu bilden. Diese Ausgestaltung des Sensors ist insbesondere dann von besonderer Bedeutung, wenn der Sensor nicht nur erfassen soll, ob ein Objekt vollständig im Detektionsbereich ist oder nicht, sondern wenn der Sensor auch erfassen soll, ob das Objekt ganz oder teilweise in seinem Detektionsbereich eingedrungen ist. Somit eignet sich diese Ausgestaltung des Sensors insbesondere dann, wenn mit Schwellwerten bei der Messung gearbeitet wird.

Selbstverständlich können auch mehrere Sensoren der Sensoreinrichtung derart ausgestaltet sein.

Auch ist es denkbar, dass die Sensoreinrichtung zusätzlich ein Einparksystem oder ein Fahrleitsystem unterstützt bzw. sogar bei kurzen Distanzen, d. h. unter 2 m vollständig ersetzt. Die an der Sensoreinrichtung erfassten Messsignale können somit auch dazu genutzt werden, um die Fahrsicherheit des Kraftfahrzeuges, insbesondere beim Einparken oder bei niedrigsten Geschwindigkeiten, zu unterstützen.

Ebenfalls ist es denkbar, dass ein Sensor zusätzlich mit einem Heizelement ausgestattet ist bzw. ein entsprechendes Heizelement in der Nähe eines Sensors angeordnet ist, um möglichst Wasser im Bereich des Sensors durch zusätzliche Wärmeeinwirkung schnellstmöglich verdunsten zu lassen. Auch kann dieses Heizelement zum Auftauen von gefrorenem Wasser dienen, was sich am Sensor oder in unmittelbarer Nähe festgefroren hat. Hierdurch lässt sich die Messgenauigkeit deutlich erhöhen, da gerade Wasser bei einem kapazitiven Sensor für große messtechnische Störeinflüsse sorgt. Dabei ist es auch denkbar, dass das Heizelement je nach Witterung temporär durch die Elektrikeinheit ein- und ausgeschaltet wird, um somit regelmäßig dafür zu sorgen, dass die direkte Umgebung des jeweiligen Sensors wasserfrei ausgestaltet ist. Es sei auch erwähnt, dass es denkbar ist, den Sensor selbst oder z. B. ein Abschirmelement für den Sensor als Heizelement zu verwenden. Hierfür kann die Steuereinheit sorgen, in dem sie beispielsweise den Sensor oder das Abschirmelement entsprechend einmal als Heizelement anschaltet und einmal als Sensor oder Abschirmelement nutzt. Selbstverständlich kann auch ein zusätzliches Heizelement vorhanden sein, um die erforderliche Wärme zu erzeugen. Nur der Vollständigkeit halber sei erwähnt, dass das Heizelement mit dem Sensor und ggf. dem Abschirmelement zu einem Bauteil durch z. B. eine Umhüllung oder eine Isolierung zusammengefasst sein kann.

Zweckmäßigerweise sind zusätzlich Wasserleitelemente entweder direkt an dem Sensor, dem Trägerkörper für die Moduleinheit oder dem Stoßfänger, dem Türschweller oder dergleichen angeordnet, mit deren Hilfe versucht wird, vorhandenes Wasser möglichst aus dem Detektionsbereich des entsprechenden Sensors abzuleiten. Hierdurch sollen die bereits zuvor beschriebenen Störungen bzw. negativen Messeinflüsse auf den jeweiligen Sensor durch das ggf. vorhandene Wasser weitestgehend minimiert werden. Die Wasserleitelemente können selbst als Vorsprünge oder Abrisskanten oder als Entwässerungsrinnen bzw. Löcher ausgestaltet sein. Es soll somit verhindert werden, dass sich ein Wasserfilm, insbesondere im direkten Detektionsbereich des Sensors bildet. Die Wasserleitelemente können z.B. keilförmig ausgestaltet sein, wodurch sich eine Abrisskante für einen Wasserlauf bildet, an dem sich dann die Wassertropfen von dem Wasserleitelement trennen. Auch kann das Wasserleitelement nur aus einer Abrisskante bestehen, die in dem Trägerkörper oder dem Stoßfänger oder dergleichen eingearbeitet ist. Auch sind Wasserrinnen oder Durchbrüche zum Ableiten bzw. Wegleiten des Wassers vom Sensor denkbar, die am Trägerkörper oder dem Fahrzeug, insbesondere dem Stoßfänger, dem Türschweller oder dergleichen angeordnet sind.

Die Erfindung wird ebenfalls durch ein Verfahren mit allen Merkmalen des unabhängigen Verfahrensanspruches gelöst. Weitere mögliche Ausführungsformen des Verfahrens sind in den jeweiligen Verfahrensunteransprüchen vorgeschlagen.

Beispielsweise ist es denkbar, dass ein erster und ein zweiter Sensor vorgesehen ist, wobei das Objekt, insbesondere der berechtigte Benutzer, eine bewusste Handlung vornimmt, die vom ersten oder zweiten Sensor erfasst wird. Die bewusste Handlung kann beispielsweise eine Annäherung des Benutzers mit seinem Arm oder Hand in die Nähe des erste oder des zweiten Sensors sein. Selbstverständlich ist es ebenfalls möglich, dass die Moduleinheit lediglich mit einem Sensor zur entsprechenden Detektion eines Objektes auskommt, wodurch über die Detektion die Betätigung des beweglichen Teils aktivierbar ist.

Beispielsweise ist es in einer möglichen Ausführungsform denkbar, dass zur Detektion zuerst der erste und anschließend der zweite Sensor aktiviert werden oder dass zur Detektion beide Sensoren gleichzeitig aktiviert werden.

In einer weiteren Alternative wird eine bewusste Bein- oder Fußbewegung des Benutzers durch den ersten Sensor detektiert und eine weitere Körperbewegung des Benutzers durch den zweiten Sensor detektiert.

Ferner kann vorgesehen sein, dass während der Detektion mindestens eine Leuchteinheit des Kraftfahrzeuges eine definierte Leuchtweise aufweist.

In einer möglichen Ausführungsform ist die Moduleinheit am Heckbereich und/oder am Seitentürbereich des Kraftfahrzeuges insbesondere unterhalb einer Seitenschiebetür angeordnet. Über eine entsprechende Detektion einer Person, die sich in der Nähe der Seitenschiebetür des Kraftfahrzeuges befindet, kann ein Öffnungsvorgang der Schiebetür ausgelöst werden. Diese Ausführungsform ist gerade bei Fahrzeugen, die als Nutzfahrzeuge, insbesondere als Transporter oder Kleintransporter, ausgeführt sind, nützlich.

Darüber hinaus ist es möglich, dass die Geschwindigkeit der Öffnungsbewegung und/oder Schließbewegung der Schiebetür veränderbar ist, insbesondere die Elektrikeinheit die Geschwindigkeit der Öffnungsbewegung und/oder Schließbewegung der Schiebetür steuert und/oder regelt.

Das Verfahren kann derart ausgestaltet sein, dass die tatsächliche Aktivierung des beweglichen Teils nach einer definierten Zeit und/oder in Abhängigkeit von einem definierten Abstand erfolgt, den der Benutzer zur Moduleinheit aufweisen muss. Hierbei kann vorgesehen sein, dass eine definierte Zeit vorgegeben ist, die zeitversetzt nach einer positiven Detektion und/oder nach einem positiven Authentifizierungsvorgang die Öffnung des beweglichen Teils auslöst. Ebenfalls kann es aufgrund der Konstruktion des Kraftfahrzeuges, insbesondere des beweglichen Teils, von Vorteil sein, dass eine Öffnung des beweglichen Teils erst dann erfolgt, wenn sich der Benutzer in einem definierten Abstand zum beweglichen Teil befindet. Das bedeutet, dass über die Sensoreinrichtung, die sich in der Moduleinheit sich befindet, der notwendige Abstand zum Benutzer ermittelt wird. In einer möglichen Ausführungsform kann es notwendig sein, dass der Benutzer sich erst vom beweglichen Teil wegbewegen muss, damit eine Betätigung des beweglichen Teils ausgelöst wird.

Ebenfalls kann vorgesehen sein, dass die Moduleinheit mit einer eigenen Leuchteinheit ausgeführt ist, die entsprechend ihrer Leuchtweise den notwendigen Abstand dem Benutzer kommuniziert. Falls sich der Benutzer noch zu Nahe am Kraftfahrzeug befindet, kann beispielsweise die Leuchteinheit mit einer ersten Farbe dem Benutzer eine entsprechende Information signalisieren. Befindet sich der Benutzer in einer ausreichenden Entfernung zur Moduleinheit, wechselt die Leuchteinheit ihre Farbe und die Öffnungsbewegung des beweglichen Teils kann erfolgen.

Ebenfalls kann es vorgesehen sein, dass über einen ID-Geber, den der Benutzer mit sich trägt, der Authentifizierungsvorgang gestartet wird und die Sensoreinrichtung aktiviert wird, obwohl insbesondere der Benutzer sich außerhalb des Detektionsbereiches befindet. Hierbei bietet das Verfahren die Möglichkeit, dass der Benutzer in größerer Entfernung zum Kraftfahrzeug den ID-Geber betätigen kann, sodass zunächst der Authentifizierungsvorgang ausgelöst wird. Erst wenn sich der Benutzer in der Nähe des Kraftfahrzeuges, insbesondere der Moduleinheit, befindet, erfolgt eine entsprechende Detektion über die Sensoreinrichtung, um die Betätigung des beweglichen Teils zu aktivieren. Das bedeutet, dass der Authentifizierungsvorgang vor dem Detektionsvorgang zur Betätigung des beweglichen Teils vorgelagert sein kann. Die Sensoreinrichtung kann nach positiver Authentifikation bereits aktiviert sein.

Ebenfalls ist es denkbar, dass in Abhängigkeit eines Geschwindigkeitssignals eine Betätigung des beweglichen Teils erfolgt. Das bedeutet, dass lediglich, wenn das Kraftfahrzeug steht und sich nicht bewegt, eine Betätigung des beweglichen Teils möglich ist.

Merkmale und Details, die im Zusammenhang mit dem Verfahren beschrieben sind, gelten dabei selbstverständlich auch im Zusammenhang mit der Moduleinheit und umgekehrt. Das erfindungsgemäße Verfahren kann mit der Moduleinheit bzw. Sensoreinrichtung durchgeführt werden.

Die Figuren zeigen:
- Fig. 1: eine Moduleinheit mit Sensoreinrichtung, Trägerkörper sowie Elektrikeinheit,
- Fig. 2: eine alternative Anordnung der Moduleinheit am Kraftfahrzeug,
- Fig. 3: eine mögliche Befestigungsalternative der Moduleinheit gemäß Fig. 2,
- Fig. 4: eine mögliche Ausgestaltung der Moduleinheit zur zuverlässigen Fixierung am Kraftfahrzeug,
- Fig. 5: eine weitere Alternative der Ausgestaltung der Moduleinheit,
- Fig. 6: eine weitere Alternative der Moduleinheit mit drei Sensoren,
- Fig. 7: eine weitere Ausführungsalternative der Moduleinheit, die als Nummernschildbeleuchtungseinheit ausgeführt ist,
- Fig. 8: eine weitere Ausführungsalternative der Moduleinheit,
- Fig. 9: eine weitere Ausführungsalternative der Moduleinheit, die in einer Heckkameravorrichtung integriert ist,
- Fig. 10: eine mögliche Befestigungsalternative der Elektrikeinheit am Trägerkörper der Moduleinheit,
- Fig. 11: eine schematische Darstellung einer möglichen Anordnung der Moduleinheit, die in Datenkommunikation mit einer Hauptelektrikeinheit steht,
- Fig. 12: eine weitere Ausgestaltungsform einer nicht erfindungsgemäßen Moduleinheit,
- Fig. 13: eine weitere Ausführungsalternative einer nicht erfindungsgemäßen Moduleinheit,
- Fig. 14: eine weitere Ausführungsalternative einer nicht erfindungsgemäßen Moduleinheit,
- Fig. 15: ein schematisches Flussdiagramm, welches den Authentifizierungsvorgang und den Detektionsvorgang berücksichtigt,
- Fig. 16: eine weitere Ausführungsalternative für die Positionierung der Moduleinheit,
- Fig. 17: eine mögliche Befestigung der Elektrikeinheit an dem Trägerkörper,
- Fig. 18: weitere Befestigungsmöglichkeiten der Elektrikeinheit vergleichbar zu Fig. 17,
- Fig. 19: eine mögliche Ausgestaltung von Wasserleitelementen im Bereich der Sensoren,
- Fig. 20: weitere Ausgestaltung der Wasserleitelemente im Bereich der Sensoren,
- Fig. 21: weitere Ausgestaltungen von Wasserleitelementen für die Sensoren und
- Fig. 22: eine schematische, dreidimensionale Ansicht eines länglichen Sensors mit Wasserleitelementen.

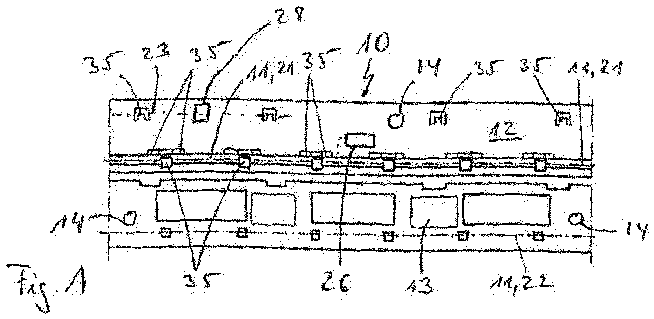

Fig. 1 zeigt rein schematisch eine mögliche Ausführungsvariante der Moduleinheit 10, die mit einer Sensoreinrichtung 11 für eine Betätigung eines beweglichen Teils, insbesondere einer Klappe eines Kraftfahrzeuges ausgeführt ist. Hierauf wird noch im Folgenden eingegangen. Die Moduleinheit 10 weist einen Trägerkörper 12 auf, an dem die Sensoreinrichtung 11 mit wenigstens einem Sensor 21 angeordnet ist. Der Sensor 21 ist hier über Befestigungsmittel 35 am Trägerkörper 12 befestigt. Der Sensor 21 weist hierbei eine längliche Ausgestaltung auf, die quer zur Fahrzeugrichtung sich erstreckt. Parallel zum schematisch dargestellten Sensor 21 ist beabstandet ein weiterer Sensor 22 an dem Trägerkörper 12 befestigbar, welches explizit nicht dargestellt ist. Auch oberhalb des Sensors 11 im Bereich der Befestigungsmittel 35, die am oberen Randbereich der Moduleinheit 10 sich befinden, ist ein dritter Sensor 23 befestigbar.

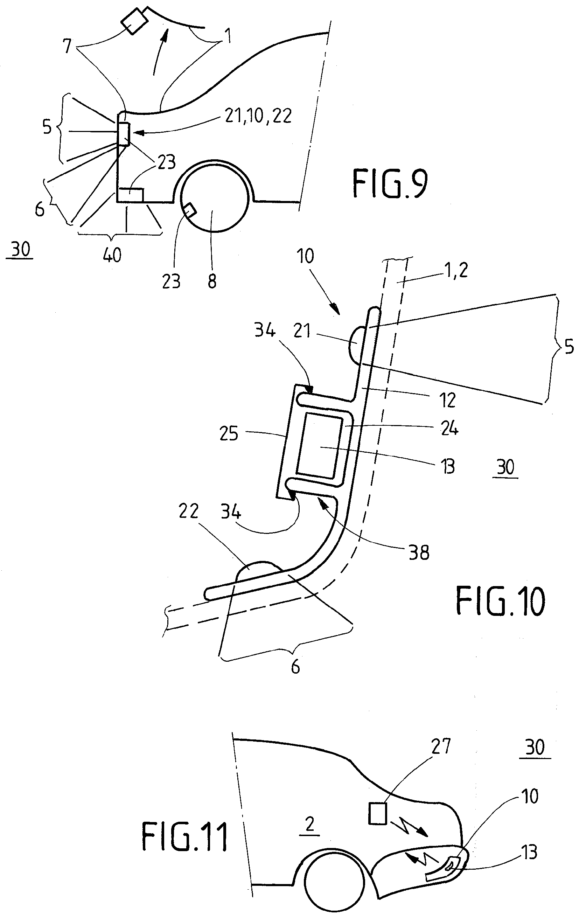

Die Moduleinheit 10 weist des Weiteren eine Elektrikeinheit 13 auf, die sowohl mit der Sensoreinrichtung 11 als auch mit einer kraftfahrzeugseitigen Hauptelektrikeinheit 27, die exemplarisch in Fig. 11 dargestellt ist, verbunden ist. Darüber hinaus ist an der Moduleinheit 10 ein Überprüfungsmodul 26 angeordnet, welches die Funktionsweise der Sensoreinrichtung 11, insbesondere der einzelnen Sensoren 11 überprüft. Der Trägerkörper 12 ist aus einem Kunststoff hergestellt. Hierbei ist der Trägerkörper 12 sowie die Moduleinheit 10 derart als einzeln handhabbares Modul ausgeführt, dass die Moduleinheit 10 auf einfache Art und Weise am Kraftfahrzeug befestigbar ist. Das bedeutet, dass die Moduleinheit 10 mit allen in Fig. 1 dargestellten Komponenten durch den Werker während der Montage an einem Kraftfahrzeugteil befestigt werden kann.

Für die Befestigung der Moduleinheit 10 am Kraftfahrzeug 2 sind im vorliegenden Ausführungsbeispiel rein schematisch Befestigungselemente 14 dargestellt, mit denen eine Fixierung am Kraftfahrzeug hergestellt werden kann. Des Weiteren ist ein Notschalter 28 vorgesehen, der vom Benutzer taktil aktiviert werden kann. Falls die Sensoreinrichtung 11 in ihrer Funktionsweise gestört sein sollte, kann der Benutzer diesen Notschalter 28 betätigen, um eine entsprechende Aktivierung des beweglichen Teils 1 auszulösen.

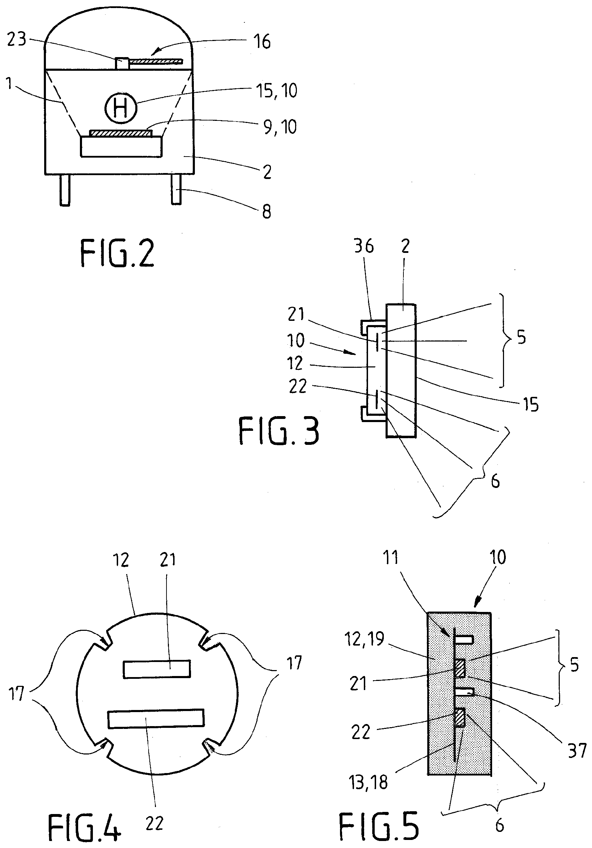

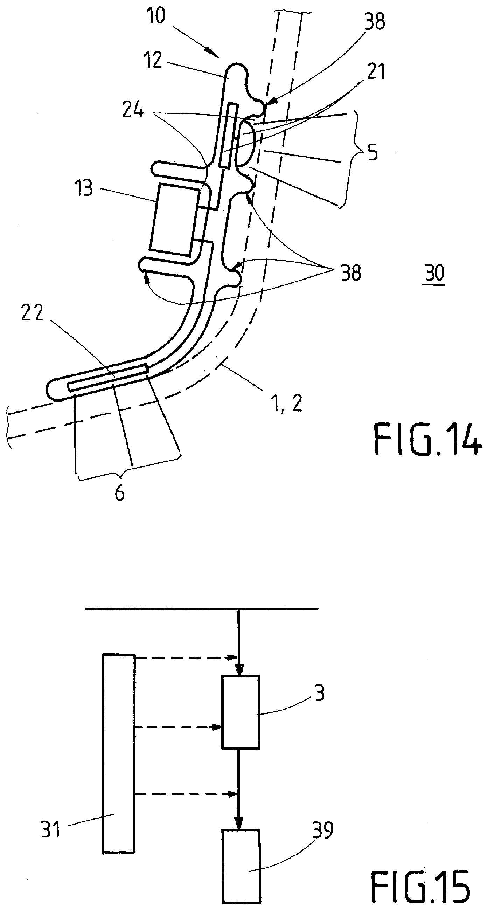

In Fig. 2 ist ein Kraftfahrzeug 2 dargestellt, welches ein Emblem 15 aufweist, auf dem beispielsweise die Fahrzeugmarke dargestellt sein kann. Wie in Fig. 2 als auch in den übrigen Ausführungsbeispielen bis Fig. 15 weist die Sensoreinrichtung 11 mindestens zwei Sensoren 21, 22 auf. In Fig. 3 ist eine mögliche Schnittdarstellung im Bereich des Emblems 15 gemäß Fig. 2 dargestellt. Wie deutlich in Fig. 3 zu erkennen ist, weist das Kraftfahrzeug 2 innenseitig zwei Fixierungselemente 36 auf, innerhalb dieser die Moduleinheit 10 befestigt ist. Ein erster Sensor 21 und ein zweiter Sensor 22 sind im Trägerkörper 12 befestigt. An der Außenseite ist das Emblem 15 sichtbar angebracht. Ebenfalls ist es denkbar, dass der Trägerkörper 12 als eigenständiges Bauteil sichtbar von außen für den Benutzer ausgeführt ist, wobei der Trägerkörper 12 alleine an seiner Außenfläche das Emblem 15 trägt, welches schematisch in Fig. 2 angedeutet ist. Der erste Sensor 21 weist einen ersten Detektionsbereich 5 und der zweite Sensor 22 weist einen zweiten Detektionsbereich 6 auf. Wie in Fig. 3 als auch in den übrigen Ausführungsformen bis Fig. 14 können die Detektionsbereiche 5, 6 unterschiedlich groß ausgebildet sein.

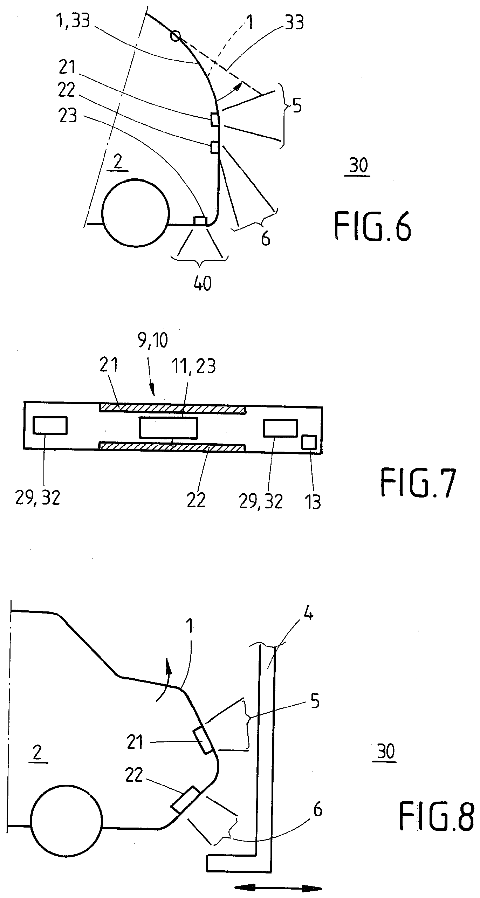

Ebenfalls ist es denkbar, dass die Moduleinheit 10 als Nummernschildbeleuchtungseinheit 9 ausgeführt sein kann, welches in Fig. 2 sowie in Fig. 7 gezeigt ist. Hierbei weist die Moduleinheit 10 zwei Leuchteinheiten 29, 32 auf, die zur Beleuchtung des Nummernschildes des Kraftfahrzeuges dient. Des Weiteren ist die Moduleinheit 10 mit der Elektrikeinheit 13 ausgeführt.

In Fig. 4 ist der Trägerkörper 12 dargestellt, an dem der erste Sensor 21 und der zweite Sensor 22 angeordnet sind. Des Weiteren weist der Trägerkörper 12 vier Positionierungsmittel 17 auf, damit der Monteur bei der Befestigung der Moduleinheit 10 eine eindeutige Fixierung des Trägerkörpers 12 am Kraftfahrzeugbauteil erreicht. Diese Positionierungsmittel sind als Aussparungen ausgeführt. Alternative geometrische Ausführungsformen sowie alternative Positionierungsmittel sind ebenfalls denkbar.

In Fig. 5 ist die Moduleinheit 10 mit der Sensoreinrichtung 11 dargestellt, wobei die Elektrikeinheit 13 eine Platine 18 aufweist, auf der der erste Sensor 21 und der zweite Sensor 22 angeordnet sind. Zwischen beiden Sensoren 21, 22 ist ein Abschirmelement 37 vorgesehen. Falls es sich bei den Sensoren 21, 22 um kapazitive Sensoren handelt, trägt das Abschirmelement 37 dazu bei, eine zufriedene Funktionsweise der Gesamtanordnung zu gewährleisten. Des Weiteren sind der erste Detektionsbereich 5 dem ersten Sensor 21 und der zweite Detektionsbereich 6 dem zweiten Sensor 22 zuzuordnen. Die Elektrikeinheit 13 ist in einer Vergussmasse 19 eingeschlossen, die als Trägerkörper 12 wirkt. Die Moduleinheit 10 kann, wie in Fig. 1 bereits diskutiert, über diverse Befestigungsmöglichkeiten am Kraftfahrzeug fixiert werden.

In Fig. 6 weist die Moduleinheit 10 einen ersten Sensor 21 und einen zweiten Sensor 22 auf. Gemäß Fig. 8 ist ein Kraftfahrzeug 2 schematisch angedeutet, welches an seinem Heckbereich mit einer Moduleinheit 10 ausgeführt ist, die einen ersten Sensor 21 und einen zweiten Sensor 22 aufweist, die jeweils mit unterschiedlichen Detektionsbereichen 5, 6 ausgestattet sind. Der Detektionsvorgang kann derart erfolgen, dass sowohl der erste Sensor 21 als auch der zweite Sensor 22 gleichzeitig ein Objekt detektieren. Hierbei sind die Detektionsweiten der Detektionsbereiche unterschiedlich groß ausgestattet. Der Detektionsbereich 5 hat einen geringen Wirkungsbereich, das bedeutet, das Objekt muss sich sehr nah der Moduleinheit 10 nähern, um vom Sensor 5 erkannt zu werden. Der Detektionsbereich 6 wirkt in einer weiteren Entfernung als der erste Detektionsbereich 5.

Gemäß Fig. 8 kann eine Detektion derart erfolgen, dass zunächst über den zweiten Sensor 22 ein Objekt 4 detektiert wird. Anschließend muss sich das Objekt dem ersten Sensor 21 stark annähern, damit eine positive Detektion erfolgt, um eine entsprechende Betätigung des beweglichen Teils 1 zu aktivieren. Ebenfalls ist es denkbar, dass zunächst über den ersten Sensor 21 eine Detektion des Objektes 4 erfolgt und anschließend der zweite Sensor 22 aktiviert wird, um innerhalb seines zweiten Detektionsbereiches das Objekt 4 zu detektieren.

Ebenfalls ist es gemäß Fig. 8 denkbar, dass das Objekt 4 gemäß des schematisch dargestellten Doppelpfeils vom Kraftfahrzeug nach erfolgreicher Detektion beider Sensoren 21, 22 sich noch entfernen muss, damit eine entsprechende Aktivierung des beweglichen Teils 1 ausgelöst wird.

Fig. 10 zeigt rein schematisch eine mögliche Ausführungsform des Trägerkörpers 12, an dem ein erster Sensor 21 und ein zweiter Sensor 22 angeordnet ist, die ihre entsprechenden Detektionsbereiche 5 und 6 aufweisen. Der Trägerkörper 12 weist ein entsprechendes Profil 38 auf, mit einer Aufnahme 24, in der die Elektrikeinheit 13 angeordnet ist. Zur zuverlässigen Abdichtung der Elektrikeinheit 13 ist auf das Profil 38 ein Deckelelement 25 aufgesetzt, welches zusätzlich mit einer Dichtung 34 ausgeführt ist. Alternativ kann die Elektrikeinheit 13 vollständig innerhalb des Modulträgers 10 eingegossen sein. Der Modulträger 10 ist am Kraftfahrzeug 2 bzw. am beweglichen Teil 1 befestigt.

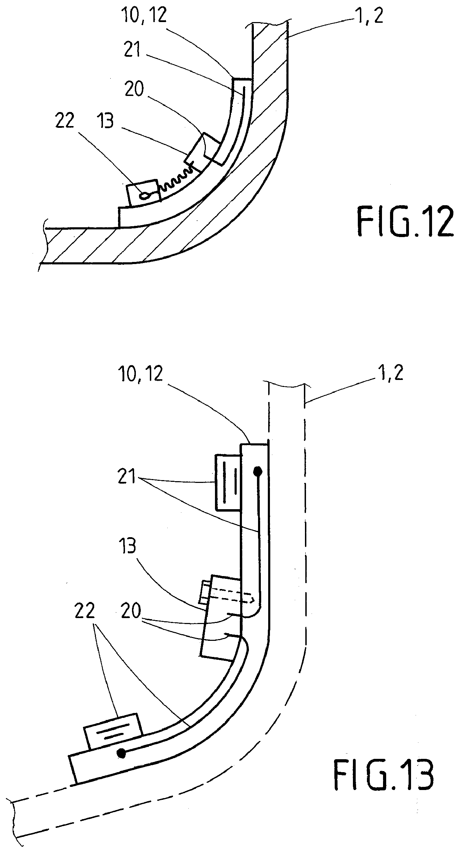

In Fig. 12 ist der erste Sensor 21 als Versteifungselement ausgeführt. Der erste Sensor 21 befindet sich innerhalb des Trägerkörpers 12, wobei eine Kontaktstelle 20 des ersten Sensor 21 aus dem Trägerkörper 12 herausragt. An der Kontaktstelle 20 ist die Elektrikeinheit 13 aufgesetzt. Der zweite Sensor 22 ist beabstandet zum ersten Sensor 21 am Trägerkörper 12 befestigt. Der zweite Sensor 22 ist über ein Kabelelement mit der Elektrikeinheit 13 verbunden. Die Moduleinheit 10 ist an einem Kraftfahrzeugteil 1, 2 befestigt.

Fig. 13 zeigt eine weitere Ausgestaltungsform einer Moduleinheit 10, wobei innerhalb des Trägerkörpers 12 ein Sensor 21 als Teilsensor integriert ist. Der zweite Teilsensor 21 befindet sich aufgesetzt innenseitig am Trägerkörper 12. Beide Teilsensoren sind miteinander elektrisch verbunden, wobei beide Teilsensoren den ersten Sensor 21 bilden, der wie in Fig. 12 eine außenliegende Kontaktstelle 20 aufweist, mit der die Elektrikeinheit 13 verbunden ist. Hierbei ist die Elektrikeinheit 13 über eine Schraubverbindung mit dem Trägerkörper 12 verbunden. Der zweite Sensor 22 ist ebenfalls durch zwei Teilsensoren gebildet, wobei der erste Teilsensor innenseitig auf dem Trägerkörper 12 aufgesetzt ist und der zweite Teilsensor innerhalb des Trägerkörpers 12 verläuft. Auch der zweite Sensor 22 weist eine entsprechende außenliegende Kontaktstelle 20 auf, die mit der Elektrikeinheit 13 verbunden ist. Die Moduleinheit 10 ist an einem Kraftfahrzeugteil 1, 2 befestigbar.

Gemäß Fig. 14 weist die Moduleinheit 10 eine entsprechende am Trägerkörper 12 ausgeführte Profilierung 38 auf. Innerhalb der innenseitigen Profilierung 38 wird eine Aufnahme 24 bereitgestellt, innerhalb der die Elektrikeinheit 13 angeordnet ist. Des Weiteren ist das Profil 38 ebenfalls außenseitig angeordnet, wobei in dem außenliegenden Profil 38 sich ebenfalls eine Aufnahme 24 bildet, innerhalb dieser der erste Sensor 21 angeordnet ist. Das außenliegende Profil 38 ist mit stegartigen Erstreckungen ausgeführt, die unmittelbar am Kraftfahrzeugteil 2 anliegen und für eine zuverlässige Abdichtung und Isolierung des ersten Sensors 21 sorgen. Der erste Sensor 21 ist mit der Elektrikeinheit 13 verbunden. Des Weiteren ist ein zweiter Sensor 22 innerhalb des Trägerkörpers 12 integriert. Der Sensor 21 wird ebenfalls durch den innerhalb des Trägerkörpers 12 liegenden Teilsensors 21 und den innerhalb des äußeren Profils 38 sich befindenden Teilsensors 21 gebildet. Selbstverständlich ist es denkbar, dass lediglich ein Sensorelement 21 in der jeweiligen Aufnahme 24 des außenliegenden Profils 38 angeordnet ist. Im vorliegenden Ausführungsbeispiel befindet sich zumindest teilweise der erste Sensor 21 zwischen dem Trägerkörper 12 und dem Kraftfahrzeugteil 2.

Bezugnehmend auf Fig. 1 sowie auf die übrigen Ausführungsbeispiele ist es sowohl denkbar, dass die Sensoreinrichtung 11 zwischen dem Trägerkörper 12 und dem Kraftfahrzeugteil 1,2 liegt als auch, dass der Trägerkörper 12 zwischen der Sensoreinrichtung 11 und dem Kraftfahrzeugteil 1,2 positioniert ist.

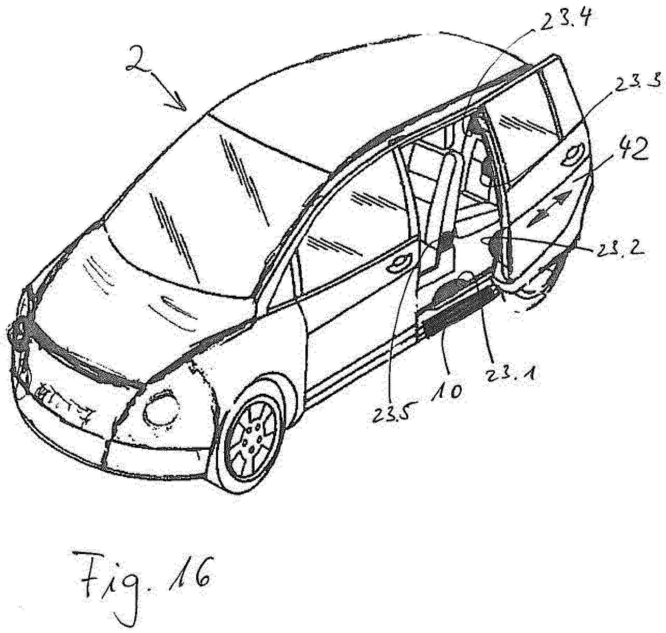

Fig. 16 zeigt eine weitere Alternative einer möglichen Positionierung der Moduleinheit 10. Im vorliegenden Ausführungsbeispiel befindet sich die Moduleinheit 10 am Türschweller der Seitenschiebetür 42 des Kraftfahrzeuges 2. Die Seitenschiebetür 42 ist hierbei gemäß der Doppelpfeildarstellung verschiebbar. Im vorliegenden Ausführungsbeispiel befindet sich die Seitenschiebetür 42 in einem Offenzustand. Die Moduleinheit 10 kann eine Ausgestaltungsform aufweisen, die beispielsweise in den Figuren 1 bis 15 beschrieben worden ist. Befindet sich die Schiebetür 42 in geschlossenem Zustand, kann die Sensoreinrichtung der Moduleinheit 10 einen berechtigten Benutzer in der Nähe der Schiebetür 42 detektieren, wodurch eine entsprechende Betätigung bzw. Öffnungsbewegung der Seitenschiebetür 42 ausgelöst werden kann.

Die Geschwindigkeit der Öffnungsbewegung und/oder der Schließbewegung der Schiebetür 42 kann veränderbar sein. Beispielsweise ist es denkbar, dass über die Elektrikeinheit innerhalb der Moduleinheit 10 eine derartige Geschwindigkeitseinstellung gesteuert oder geregelt wird. Zum Beispiel kann die Elektrikeinheit mit einem Regensensor verbunden sein. In Abhängigkeit von der Stärke des Regens, welche vom Regensensor detektiert wird, kann die Steuereinheit beispielsweise eine hohe Geschwindigkeit für die Öffnungsbewegung und/oder Schließbewegung vorsehen.

In Fig. 15 ist rein schematisch dargestellt, dass der Detektionsvorgang 3, bei dem die Sensoreinrichtung 11 aktiv ist, gleichzeitig ein Authentifizierungsvorgang 31 erfolgen kann, bei dem überprüft wird, inwieweit die berechtigte Person eine Betätigung des beweglichen Teils auslösen darf. Falls die Person einen entsprechenden "richtigen" ID-Geber mit sich trägt, erfolgt eine positive Authentifizierung. Diese Authentifizierung 31 kann vor der Detektion 3, während der Detektion 3 und nach der Detektion 3 erfolgen. Die Detektion schließt hierbei lediglich die Überprüfung einer möglichen Person oder eines möglichen Objektes in der Nähe der Moduleinheit 10 ein, worauf in den Figuren 1 bis 16 ausführlich eingegangen worden ist. Im Schritt 39 erfolgt die anschließende Aktivierung der Betätigung des beweglichen Teils, also der Öffnungsvorgang oder der Schließvorgang des beweglichen Teils, aber nur dann, falls sowohl eine positive Authentifizierung 31 als auch eine positive Detektion 3 vorliegt.

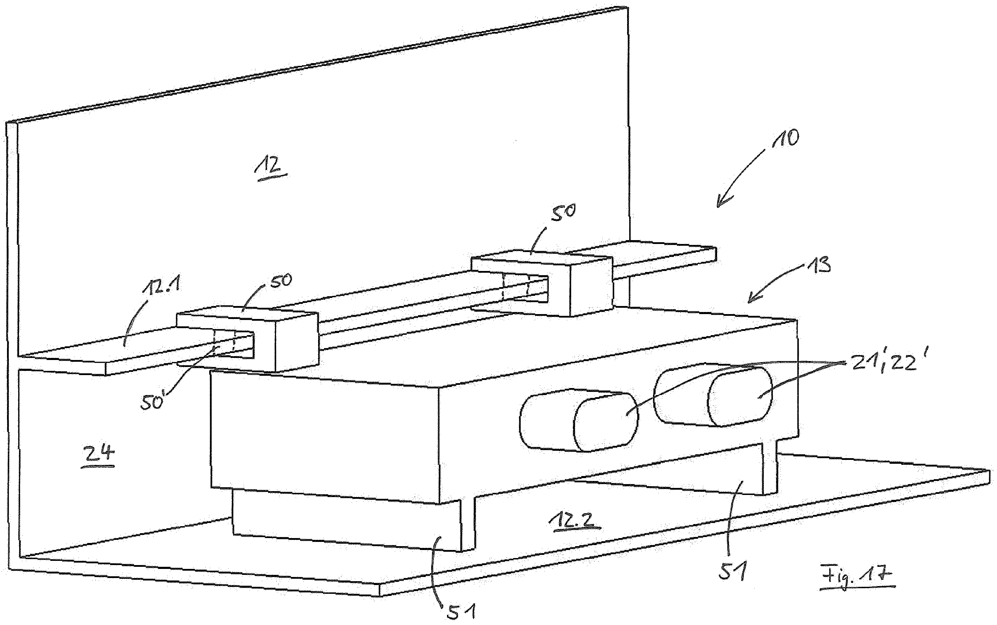

In der Figur 17 ist beispielsweise eine dreidimensionale Ansicht zur Befestigung der Elektronikeinheit 13 dargestellt. Hierbei verfügt die Elektrikeinheit 13 über ein Gehäuse mit zwei balkenförmige Standfüße 51. Mit diesen beiden Standfüßen 51 stützt sich das Gehäuse der Elektrikeinheit 13 an dem Trägerkörper 12, insbesondere einem unteren Querträger 12.2, der Moduleinheit 10 ab. Die Standfüße 51 sind in der vorliegenden Fig. 17 jedoch nicht mit dem Trägerkörper 12 befestigt, sodass zusätzliche Halteelemente 50 zum Einsatz kommen, die ebenfalls an dem Trägerkörper 12 befestigt sind, insbesondere einem oberen Querträger 12.1. Im vorliegenden Fall aus Figur 17 sind die beiden Halteelemente 50 im oberen hinteren Bereich links- und rechtsseitig am Gehäuse der Elektrikeinheit 13 angeordnet. Diese Halteelemente 50 sind z.B. mit dem Gehäuse stoffschlüssig verbunden, um somit einen mechanisch sicheren Halt zu ermöglichen. Die Halteelemente 50 wirken selbst mit Gegenhalteelemente 50' am Träger 12 insbesondere einem ersten Querträger 12.1 zusammen. Hierzu können bei den u-förmig ausgestalteten Haltelementen 50 kegel-oder rampenförmige Vorsprünge vorgesehen sein, die formschlüssig mit den als Bohrungen ausgestalteten Gegenhalteelemente 50' am ersten Querträger 12.1 zusammenwirken. Somit ist die Elektrikeinheit 13 auch bei starken mechanischen Einflüssen sicher am Trägerkörper 12 oder dem Stoßfänger oder dem Türschweller oder dergleichen direkt oder indirekt am Fahrzeug 2 befestigt. Zusätzlich ist im vorliegenden Fall am Trägerkörper 12 der obere Querträger 12.1 und der untere Querträger 12.2 vorgesehen, die mehr oder weniger eine u-förmige Aufnahme 24 für die Elektrikeinheit 13 bilden. Die Elektrikeinheit 13 steht mit ihren Standfüßen 51 auf dem unteren Querträger 12.2, wobei jedoch auch eine hängende Befestigung an dem ersten Querträger 12.1 denkbar wäre. Die Standfüße 51 in der Figur 17 können selbst aus einem elastischen Material bestehen, um somit mechanische Stöße zu absorbieren. Auch ist es denkbar, dass die Elektrikeinheit 13 nur über die Standfüße 51 mit dem Trägerkörper 12 oder dem Fahrzeug 2 form- und/oder kraftschlüssig und/oder stoffschlüssig verbunden wird.

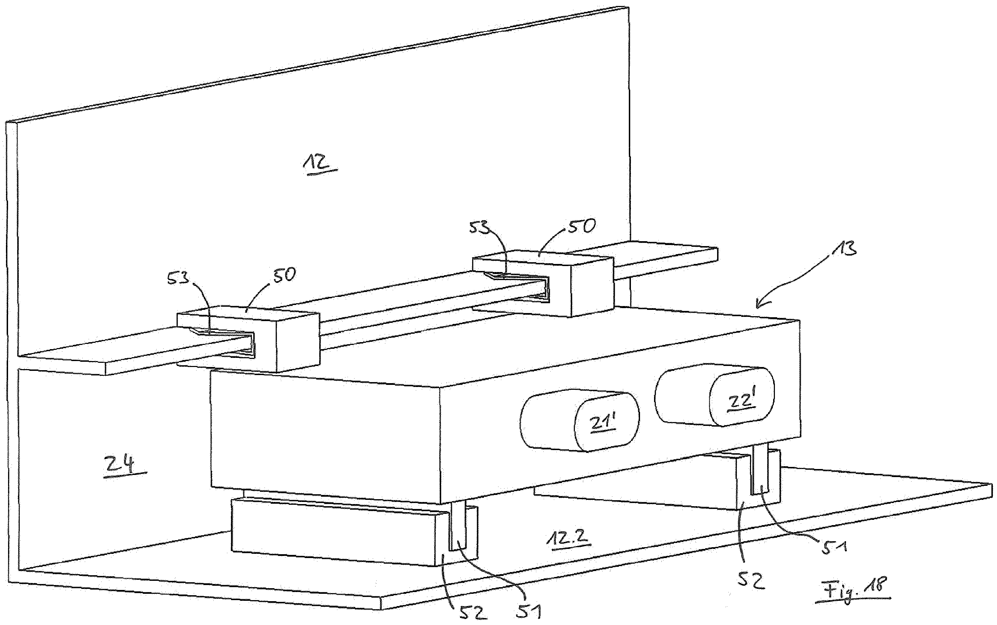

In der weiteren Figur 18, die eine weitere Befestigung der Elektrikeinheit 13 zur Figur 17 offenbart, sind die Standfüße 51 in u-förmigen Puffern 52 angeordnet, um somit einerseits eine formschlüssige Befestigung und andererseits eine schockabsorbierende Halterung der Elektronikeinheit 13 am Fahrzeug 2 bzw. Trägerkörper 12 zu ermöglichen. In der Figur 18 ist die u-förmige Aufnahme in den Pufferelementen 52 nach vorne hin offen ausgestaltet, wobei diese jedoch auch geschlossen sein kann, damit die Elektrikeinheit 13 auch nach vorne hin durch die Pufferelemente 52 am Trägerelement 12 befestigt ist. Selbstverständlich ist es auch denkbar, dass anstelle der dargestellten balkenförmigen Standfüße 51 auch zylinderförmige Standfüße 51 oder dergleichen zum Einsatz kommen, die mit entsprechenden komplementär ausgestalteten Pufferelementen 52 am Fahrzeug 2 oder Trägerkörper 12 zusammenwirken. Auch sei an dieser Stelle erwähnt, dass es denkbar ist, die Standfüße 51 und die Pufferelemente 52 zu vertauschen, um eine komplementäre Befestigung der Elektrikeinheit 13 am Fahrzeug 2 zu erzielen. Im vorliegenden Fall aus Figur 18 weisen die u-förmigen Halteelemente 50 grundsätzliche Metallclipse 53 auf, die sich im oberen Querträger 12.1 des Trägerkörpers 12 verkrallen, um somit die Elektrikeinheit 13 form- und/oder kraftschlüssig am Trägerkörper 12 zu halten. Bei der dargestellten Elektrikeinheit 13 sind zwei Sensoranschlüsse 21', 22' dargestellt für den ersten Sensor 21 und dem zweiten Sensor 22. Selbstverständlich kann auch ein dritter oder weiterer Sensor vorgesehen sein. Auch kann nur ein Sensor 21 vorhanden sein für die Sensoreinrichtung 11 bzw. Moduleinheit 10.

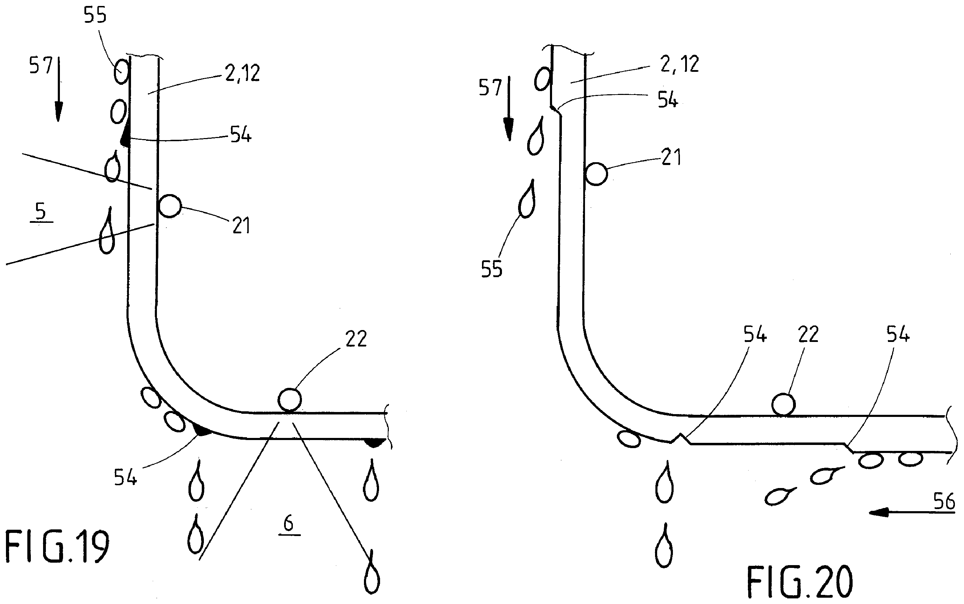

In den Figuren 19 bis 22 werden verschiedene Varianten der Ausgestaltung von Wasserleitelementen 54 dargestellt, mit Hilfe derer versucht wird, vorhandenes Wasser möglichst zügig aus dem Detektionsbereich 5, 6 der Sensoren 21, 22 und 23 zu leiten. Gerade kapazitiv arbeitende Sensoren reagieren stark auf Wasser, insbesondere Salzwasser, wie es im Winter bei Schnee und Glatteis häufig vorkommen kann.

In der Figur 19 ist oberhalb des ersten Sensors 21 außenseitig am Trägerkörper 12 bzw. am Stoßfänger vom Kraftfahrzeug 2 ein erstes Wasserleitelement 54 in Form eines keilförmigen Elements vorgesehen. Läuft nun an der Außenseite, das ist die abgewandte Seite von den Sensoren 21 und 22, das Wasser 55 (s. Pfeil 57) entlang, so gelangt dieses unter dem Einfluss der Schwerkraft bis zum ersten Wasserelement 54. Aufgrund der vorhandenen Adhäsionskräfte fließt das Wasser 55 an dem rampenförmigen Wasserleitelement 54 entlang und löst sich an der unteren Abrisskante des Wasserleitelements 54 vom Trägerkörper 12 bzw. dem Stoßfänger, Türschweller oder dergleichen ab. Von dieser Abrisskante tropft dann das Wasser 55 auf den Boden, so dass sicher vermieden wird, dass es weiter an der Außenseite entlang fließt und in dem Detektionsbereich 5 des ersten Sensors 21 gelangt. Somit ist sichergestellt, dass zwar das Wasser auch kurzzeitig den Detektionsbereich 5 durchquert, aber nicht ständig, wie bei einer beispielhaften Fließbewegung, sich darin befindet. Weiter unten befindet sich am Trägerkörper 12 ein weiteres Wasserleitelement 54, welches ungefähr dreiecksförmig ausgestaltet ist und ebenfalls eine Abrisskante für das entlang fließende Wasser 55 bildet. Somit kann auch an dieser Stelle sicher vermieden werden, dass sich das Wasser 55 weiter an der Außenseite des Trägerkörpers 12 entlang in den Detektionsbereich 6 des zweiten Sensors 22 bewegt. Der Detektionsbereich 5 und 6 ist rein schematisch in der Figur 19 für die beiden Sensoren 21 und 22 angedeutet. Rechts neben dem zweiten Sensor 22 ist ebenfalls an der gegenüberliegenden Seite vom Sensorelement 22 ein weiteres Wasserleitelement 54 angeordnet was vergleichbar zum zuvor beschriebenen dreiecksförmigen Wasserleitelement ausgestaltet ist. Dieses rechte Wasserleitelement 54 sorgt dafür, dass auch Wasser 55 von der rechten Seite an dem Detektionsbereich 6 vorbei geleitet wird.

In der weiteren Figur 20 und an den vergleichbaren Stellen zur Figur 19 sind andersartige Wasserleitelemente 54 für die beiden Sensoren 21 und 22 dargestellt. Hierbei bestehen die Wasserleitelemente 54 aus einer Abrisskante für das Wasser 55. Somit soll auch mit diesen Wasserleitelement 54 sichergestellt werden, dass das Wasser 55 nicht einfach an der Außenfläche oder ggf. der Innenfläche des Trägers 12 oder Stoßfängers, Türschweller oder dergleichen entlang fließt und in den Detektionsbereich 5, 6 der Sensoren 21, 22 gelangt. Das mittlere Wasserleitelement 54, welches links auf der äußeren Seite vom zweiten Sensor 22 angeordnet ist, weist einen dreiecksförmigen oder keilförmigen Einschnitt auf, um somit eine Abrisskante für das Wasser 55 zu bilden. Der dargestellte Pfeil 57 stellt die normale Fließrichtung für das Wasser 55 dar. Der zusätzliche Pfeil 56 deutet die Windrichtung bei einem fahrenden Fahrzeug 2 an, die ebenfalls auf die Fließrichtung des Wassers 55 Einfluss nimmt. In der Figur 20 ist das rechte Wasserleitelement 54 ebenfalls nur als Abrisskante für den Sensor 22 dargestellt.

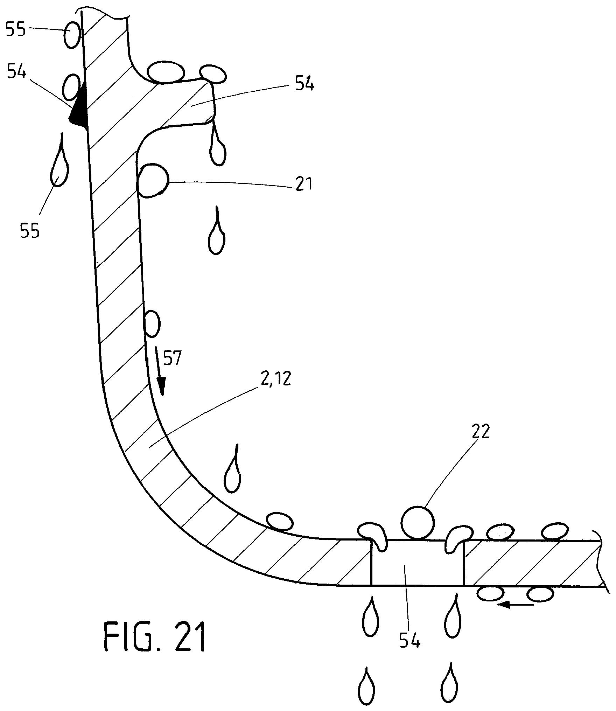

In der weiteren Figur 21 sind zu den bisher in den Figuren 19 und 20 dargestellten äußeren Wasserleitelementen 54 auch innere Wasserleitelemente 54 für die Sensoren 21, 22 vorgesehen. So ist über dem ersten Sensor 21 ein Vorsprung vorgesehen, der als Wasserleitelement 54 dient. Die untere Kante des vorsprungartigen Wasserleitelements 54 dient hierbei als Abrisskante für die daran entlang fließenden Wassertropfen 55. Zusätzlich ist an der äußeren Seite des Trägerkörpers 12 ein dreiecksförmiges Wasserleitelement 54 vorgesehen. Die beiden inneren und äußeren Wasserleitelemente 54 für den ersten Sensor 21 sind ungefähr auf gleicher Höhe am Trägerkörper 12 angeordnet. Wichtig bei dieser geometrischen Anordnung ist jedoch, dass vor dem Detektionsbereich 5 ein Abriss des abfließenden Wassers an der Oberfläche des Trägerkörpers 12 erreicht wird.

Wie bei dem unteren zweiten Sensor 22 zu erkennen ist, ist in dem Trägerkörper 12 eine Bohrung, Durchbruch oder Langloch oder dergleichen vorgesehen, damit das innerhalb des Trägerkörpers 12 angesammelte Wasser 55 entweichen kann. Dieses Wasserleitelement 54 kann auch links- und rechtsseitig vom zweiten Sensor 22 angeordnet sein, um somit zu verhindern, dass die vorhandenen Wassertropfen 54 im Detektionsbereich 6 des zweiten Sensors 22 abfließen.

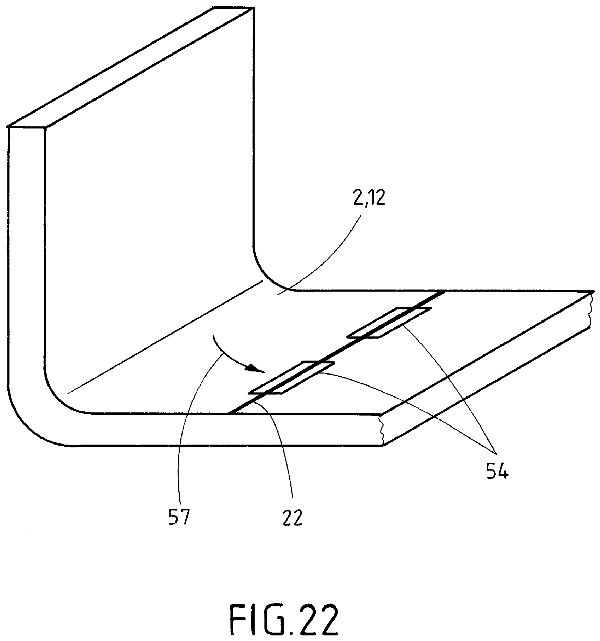

Zu Verdeutlichung ist in der Figur 22 eine dreidimensionale Ansicht von zwei langlochartig ausgestalteten Wasserleitelementen 54 unter dem Sensor 22 dargestellt. Wie bereits erwähnt, ist es ebenfalls zweckmäßig, diese langlochartig ausgestalteten Wasserleitelemente 54 links- und rechtsseitig neben den entsprechenden Sensor 21, 22 anzuordnen, wodurch eine Befestigung des entsprechenden Sensors 21, 22 auch erleichtert wird.

Es sei an diese Stelle noch erwähnt, dass anstelle des zuvor erwähnten Trägerkörpers 12 auch - wie bereits mehrfach genannt - ein Stoßfänger, ein Türschweller, ein Seitenschweller, ein Steinschlagschutz oder dergleichen als Träger für die Sensoren am Fahrzeug 2 Verwendung finden kann.

### Bezugszeichenliste

- 1: bewegliches Teil, Klappe, Heckklappe
- 2: Kraftfahrzeug
- 3: Detektion
- 4: Objekt, Benutzer
- 5: Detektionsbereich, erster Detektionsbereich
- 6: Detektionsbereich, zweiter Detektionsbereich
- 7: Heckkameravorrichtung
- 8: Reifen
- 9: Nummernschildbeleuchtungseinheit
- 10: Moduleinheit
- 11: Sensoreinrichtung
- 12: Trägerkörper
- 12.1: Querträger
- 12.2: Querträger
- 13: Elektrikeinheit, Steuereinheit
- 14: Befestigungselemente
- 15: Emblem
- 16: Scheibenwischeranordnung
- 17: Positionierungsmittel für Sensor
- 18: Platine
- 19: Vergussmasse
- 20: Kontaktstelle
- 21: erster Sensor
- 21': Sensoranschluss
- 22: zweiter Sensor
- 22': Sensoranschluss
- 23: dritter Sensor
- 24: Aufnahme des Trägerkörpers
- 25: Deckelelement
- 26: Überprüfungsmodul
- 27: Hauptelektrikeinheit
- 28: Notschalter
- 29: Leuchteinheit des Kraftfahrzeuges

- 30: Außenseite
- 31: Authentifizierungsvorgang
- 32: Leuchteinheit der Moduleinheit
- 33: Scheibe
- 34: Dichtung
- 35: Befestigungsmittel
- 36: Fixierungselement
- 37: Abschirmelement
- 38: Profil
- 39: Öffnungsvorgang, Schließvorgang, Aktivierungsvorgang
- 40: dritter Detektionsbereich
- 41: Seitentürbereich
- 42: Schiebetür
- 43: Tür

- 50: Halteelement
- 50': Gegenhalteelement
- 51: Standfuß
- 52: Pufferelement
- 53: Metallclips
- 54: Wasserleitelement
- 55: Wassertropfen
- 56: Windrichtung
- 57: Fließrichtung von 55

## Patentansprüche

1. Moduleinheit (10) mit einer Sensoreinrichtung (11) für eine Betätigung eines beweglichen Teils (1, 33) eines Kraftfahrzeuges, insbesondere einer Klappe (1), mit einem Trägerkörper (12), an dem die Sensoreinrichtung (11) mit wenigstens einem Sensor (21, 22, 23) angeordnet ist, um eine Detektion (3) eines Objektes oder eines Benutzers (4) in wenigstens einem an das Kraftfahrzeug (2) angrenzenden Detektionsbereich (5, 6, 40) zu ermöglichen, sodass über die Detektion (3) die Betätigung des beweglichen Teils (1, 33) aktivierbar ist,
**dadurch gekennzeichnet,**
**dass** der mindestens eine Sensor (21, 22, 23) als kapazitiver Sensor ausgestaltet ist, dass der mindestens eine Sensor (21, 22, 23) schlaufenförmig oder U-förmig ausgestaltet ist, sodass der Eingangsanschluss und der Ausgangsanschluss des mindestens einen Sensors (21, 22, 23) nebeneinander angeordnet sind,
**dass** ein Überprüfungsmodul (26) vorgesehen ist, das die Funktionsweise der Sensoreinrichtung (11) überprüft, wobei das Überprüfungsmodul (26) sich in der Nähe des mindestens einen Sensors (21, 22, 23) befindet, und wobei das Überprüfungsmodul (26) am Trägerkörper (12) befestigt ist,
**dass** der mindestens eine Sensor (21, 22, 23) als durchgehender Leiter ausgestaltet ist und somit kein abschließendes Ende aufweist, sodass der Gesamtwiderstand des mindestens einen Sensors (21, 22, 23) eindeutig messtechnisch vom Überprüfungsmodul (26) erfassbar ist,
wobei, wenn dieser Gesamtwiderstand des mindestens einen Sensors (21, 22, 23) einen vorgegebenen Widerstandswert überschreitet, hierdurch eindeutig auf einen elektrischen Defekt des mindestens einen Sensors (21, 22, 23) zu schließen ist,
**dass** eine mit der Sensoreinrichtung (11) verbundene Elektrikeinheit (13) in Form einer Steuereinheit (13) am Trägerkörper (12) angeordnet ist,
**dass** die Sensoreinrichtung (11) und die Elektrikeinheit (13) form- und/oder kraftschlüssig am Trägerkörper (12) befestigt sind,
und **dass** die Moduleinheit (10) derart als einzeln handhabbares Modul (10) ausgeführt ist, dass die Moduleinheit (10) am Kraftfahrzeug (2) befestigbar ist.

2. Moduleinheit (10) nach Anspruch 1,
**dadurch gekennzeichnet,**
**dass** die Sensoreinrichtung (11) mindestens einen ersten (21) und einen zweiten Sensor (22) aufweist, wobei die Sensoren (21, 22) unterschiedliche Detektionsbereiche (5, 6) aufweisen, wobei insbesondere die unterschiedlichen Detektionsbereiche (5, 6) unterschiedlich groß sind.

3. Moduleinheit (10) nach einem der vorhergehenden Ansprüche,
**dadurch gekennzeichnet,**
**dass** Befestigungselemente (14) vorgesehen sind, die zur Befestigung am Kraftfahrzeug (2) dienen, dass der Trägerkörper (12) am Kraftfahrzeug (2) formschlüssig, kraftschlüssig und/oder stoffschlüssig befestigbar ist, wobei insbesondere der Trägerkörper (12) über eine Rastverbindung am Kraftfahrzeug (2) befestigbar ist oder am Kraftfahrzeug (2) einschiebbar ist.

4. Moduleinheit (10) nach einem der vorhergehenden Ansprüche,
**dadurch gekennzeichnet,**
**dass** der Sensor (21, 22, 23) eine längliche Erstreckung aufweist, wobei insbesondere der Sensor (21, 22, 23) flexibel ausgeführt ist.

5. Moduleinheit (10) nach einem der vorhergehenden Ansprüche ,
**dadurch gekennzeichnet,**
**dass** die Sensoreinrichtung (11) eine Erstreckung aufweist, die in Breitenrichtung und/oder Längsrichtung des Kraftfahrzeuges (2) ausrichtbar ist, wobei insbesondere die Sensoren (21, 22, 23) zueinander im Wesentlichen parallel verlaufen.

6. Moduleinheit (10) nach einem der vorhergehenden Ansprüche,
**dadurch gekennzeichnet,**
**dass** Positionierungsmittel (17) vorgesehen sind, um eine eindeutige Befestigung des Trägerkörpers (12) am Kraftfahrzeug (2) zu gewährleisten.

7. Moduleinheit (10) nach einem der vorhergehenden Ansprüche,
**dadurch gekennzeichnet,**
**dass** der Trägerkörper (12) eine Aufnahme (24) aufweist, in der die Elektrikeinheit (13) sich befindet, insbesondere ein Deckelelement (25) abdichtend die Aufnahme (24) verschließt.

8. Moduleinheit (10) nach einem der vorhergehenden Ansprüche,
**dadurch gekennzeichnet,**
**dass** die Elektrikeinheit (13) dazu ausgeführt ist, kabellos Signale einer kraftfahrzeugseitigen Hauptelektrikeinheit (27) zu übermitteln.

9. Moduleinheit (10) nach einem der vorhergehenden Ansprüche,
**dadurch gekennzeichnet,**
**dass** der mindestens eine Sensor (21, 22, 23) zwischen dem Trägerkörper (12) und dem kraftfahrzeugseitigem Bauteil (2) anordenbar ist, wobei der Trägerkörper (12) mit einem Profil (30) ausgeführt ist, das zum kraftfahrzeugseitigen Bauteil (2) ausrichtbar ist und dem mindestens einem Sensor (21, 22, 23) eine bestimmte Einbaulage bietet, die insbesondere zur Außenseite abdichtbar ist.

10. Verfahren zur Betätigung eines beweglichen Teils (1,33) eines Kraftfahrzeugs, insbesondere einer Klappe (1), mit einer Moduleinheit (10), die einen Trägerkörper (12) aufweist, an dem eine Sensoreinrichtung (11) mit wenigstens einem Sensor (21, 22, 23) angeordnet ist, um eine Detektion (3) eines Objektes oder eines Benutzers (4) in wenigstens einem an das Kraftfahrzeug (2) angrenzenden Detektionsbereich (5, 6, 40) zu ermöglichen, sodass über die Detektion (3) die Betätigung des beweglichen Teils (1, 33) aktivierbar ist, wobei ein Authentifizierungsvorgang (31) vorgesehen ist, der überprüft, inwieweit das Objekt oder der Benutzer (4) berechtigt ist das bewegliche Teil (1,33) zu betätigen,
wobei der Authentifizierungsvorgang (31) vor der Detektion (3), nach der Detektion (3) und/oder während der Detektion (3) erfolgt,
**dadurch gekennzeichnet,**
**dass** der mindestens eine Sensor (21, 22, 23) als kapazitiver Sensor ausgestaltet ist, dass der mindestens eine Sensor (21, 22, 23) schlaufenförmig oder U-förmig ausgestaltet ist, sodass der Eingangsanschluss und der Ausgangsanschluss des mindestens einen Sensors (21, 22, 23) nebeneinander angeordnet sind,
**dass** ein Überprüfungsmodul (26) vorgesehen ist, das die Funktionsweise der Sensoreinrichtung (11) überprüft, wobei das Überprüfungsmodul (26) sich in der Nähe des mindestens einen Sensors (21, 22, 23) befindet, und wobei das Überprüfungsmodul (26) am Trägerkörper (12) befestigt ist,
**dass** der mindestens eine Sensor (21, 22, 23) als durchgehender Leiter ausgestaltet ist und somit kein abschließendes Ende aufweist, sodass der Gesamtwiderstand des mindestens einen Sensors (21, 22, 23) eindeutig messtechnisch vom Überprüfungsmodul (26) erfasst wird,
wobei, wenn dieser Gesamtwiderstand des mindestens einen Sensors (21, 22, 23) einen vorgegebenen Widerstandswert überschreitet, hierdurch eindeutig auf einen elektrischen Defekt des mindestens einen Sensors (21, 22, 23) geschlossen wird,
**dass** eine mit der Sensoreinrichtung (11) verbundene Elektrikeinheit (13) in Form einer Steuereinheit (13) am Trägerkörper (12) angeordnet ist,
**dass** die Sensoreinrichtung (11) und die Elektrikeinheit (13) form- und/oder kraftschlüssig am Trägerkörper (12) befestigt sind,
und **dass** die Moduleinheit (10) derart als einzeln handhabbares Modul (10) ausgeführt ist, dass die Moduleinheit (10) am Kraftfahrzeug (2) befestigt wird.

11. Verfahren nach Anspruch 10, mit dem eine Moduleinheit (10) gemäß einem der Ansprüche 1 bis 9 betreibbar ist.

## Claims

1. Module unit (10) comprising a sensor device (11) for actuating a movable part (1, 33) of a motor vehicle, in particular a flap (1), comprising a carrier body (12) on which the sensor device (11) with at least one sensor (21, 22, 23) is arranged to enable detection (3) of an object or a user (4) in at least one detection area (5, 6, 40) adjacent to the motor vehicle (2), so that the actuation of the movable part (1, 33) can be activated via the detection (3),
**characterized in that**
the at least one sensor (21, 22, 23) is designed as a capacitive sensor,
that the at least one sensor (21, 22, 23) is loop-shaped or U-shaped, such that the input terminal and the output terminal of the at least one sensor (21, 22, 23) are arranged side by side,
that a testing module (26) is provided which checks the functionality of the sensor device (11), wherein the testing module (26) is located in the vicinity of the at least one sensor (21, 22, 23), and wherein the testing module (26) is attached to the carrier body (12), that the at least one sensor (21, 22, 23) is configured as a continuous conductor and thus has no terminating end, such that the total resistance of the at least one sensor (21, 22, 23) can be unambiguously measured by the testing module (26),
wherein, if this total resistance of the at least one sensor (21, 22, 23) exceeds a predetermined resistance value, this unambiguously indicates an electrical defect in the at least one sensor (21, 22, 23),
that an electrical unit (13) connected to the sensor device (11) in the form of a control unit (13) is arranged on the carrier body (12),
that the sensor device (11) and the electrical unit (13) are secured to the carrier body (12) by form-fitting and/or force-fitting,
and that the module unit (10) is designed as an individually manipulable module (10) such that the module unit (10) can be secured to the motor vehicle (2).

2. Module unit (10) according to claim 1,
**characterized in that**
the sensor device (11) comprises at least a first (21) and a second sensor (22), wherein the sensors (21, 22) have different detection areas (5, 6), wherein, in particular, the different detection areas (5, 6) are of different sizes.

3. Module unit (10) according to one of the preceding claims,
**characterized in that**
fastening elements (14) are provided which serve for fastening to the motor vehicle (2), that the carrier body (12) can be fastened to the motor vehicle (2) by positive locking, force-fit, and/or material-fit, wherein, in particular, the carrier body (12) can be secured to the motor vehicle (2) via a snap-fit connection or can be slid into the motor vehicle (2).

4. Module unit (10) according to one of the preceding claims,
**characterized in that**
the sensor (21, 22, 23) has an elongated configuration, wherein, in particular, the sensor (21, 22, 23) is designed to be flexible.

5. Module unit (10) according to any of the preceding claims,
**characterized in that**
the sensor device (11) has an extension that can be aligned in the width direction and/or length direction of the motor vehicle (2), wherein, in particular, the sensors (21, 22, 23) run substantially parallel to one another.

6. Module unit (10) according to any of the preceding claims,
**characterized in that**
positioning means (17) are provided to ensure an unambiguous attachment of the carrier body (12) to the motor vehicle (2).

7. Module unit (10) according to any of the preceding claims,
**characterized in that**
the carrier body (12) has a housing (24) in which the electrical unit (13) is located, in particular a cover element (25) sealingly closes the housing (24).

8. Module unit (10) according to one of the preceding claims,
**characterized in that**
the electrical unit (13) is designed to transmit signals wirelessly to a vehicle-side main electrical unit (27).

9. Module unit (10) according to one of the preceding claims,
**characterized in that**
the at least one sensor (21, 22, 23) is arranged between the carrier body (12) and the vehicle-side component, wherein the carrier body (12) is designed with a profile (30) that can be aligned with the vehicle-side component and provides the at least one sensor (21, 22, 23) with a specific installation position that can be sealed, in particular, toward the outside.

10. Method for actuating a movable part (1, 33) of a motor vehicle, in particular a flap (1), using a module unit (10) comprising a carrier body (12) on which a sensor device (11) with at least one sensor (21, 22, 23) is arranged to enable detection (3) of an object or a user (4) in at least one detection area (5, 6, 40) adjacent to the motor vehicle (2), so that the actuation of the movable part (1, 33) can be activated via the detection (3), wherein an authentication process (31) is provided that verifies to what extent the object or user (4) is authorized to actuate the movable part (1, 33),
wherein the authentication process (31) takes place before detection (3), after detection (3), and/or during detection (3),
**characterized in that**
the at least one sensor (21, 22, 23) is configured as a capacitive sensor,
that the at least one sensor (21, 22, 23) is configured in a loop shape or U-shape, such that the input terminal and the output terminal of the at least one sensor (21, 22, 23) are arranged side by side,
that a testing module (26) is provided which tests the functionality of the sensor device (11), wherein the testing module (26) is located in the vicinity of the at least one sensor (21, 22, 23), and wherein the testing module (26) is attached to the carrier body (12), that the at least one sensor (21, 22, 23) is configured as a continuous conductor and thus has no terminating end, such that the total resistance of the at least one sensor (21, 22, 23) is unambiguously measured by the testing module (26),
wherein, if this total resistance of the at least one sensor (21, 22, 23) exceeds a predetermined resistance value, this unambiguously indicates an electrical defect in the at least one sensor (21, 22, 23),
that an electrical unit (13) connected to the sensor device (11) in the form of a control unit (13) is arranged on the carrier body (12),
that the sensor device (11) and the electrical unit (13) are secured to the carrier body (12) by form-fitting and/or force-fitting,
and that the module unit (10) is designed as an individually manipulable module (10) such that the module unit (10) is secured to the motor vehicle (2).

11. A method according to claim 10, by which a module unit (10) according to any one of claims 1 to 9 can be operated.

## Revendications

1. Unité modulaire (10) comprenant un dispositif de détection (11) destiné à l'actionnement d'une pièce mobile (1, 33) d'un véhicule automobile, en particulier d'un volet (1), comprenant un corps de support (12) sur lequel est disposé le dispositif de détection (11) avec au moins un capteur (21, 22, 23) afin de permettre la détection (3) d'un objet ou d'un utilisateur (4) dans au moins une zone de détection (5, 6, 40) adjacente au véhicule automobile (2) de manière à ce que la détection (3) permette d'activer l'actionnement de la partie mobile (1, 33),
**caractérisée en ce**
**que** ledit au moins un capteur (21, 22, 23) est conçu comme un capteur capacitif,
**que** ledit au moins un capteur (21, 22, 23) est configuré en forme de boucle ou de U, de sorte que le raccord d'entrée et le raccord de sortie dudit au moins un capteur (21, 22, 23) sont disposés l'un à côté de l'autre,
**qu'**un module de contrôle (26) est prévu, qui contrôle le fonctionnement du dispositif de détection (11), le module de contrôle (26) se trouvant à proximité dudit au moins un capteur (21, 22, 23), et le module de contrôle (26) étant fixé au corps de support (12),
**que** ledit au moins un capteur (21, 22, 23) est conçu comme un conducteur continu et ne présente donc pas d'extrémité terminale, de sorte que la résistance totale dudit au moins un capteur (21, 22, 23) peut être mesurée de manière univoque par le module de contrôle (26),
et lorsque cette résistance totale dudit au moins un capteur (21, 22, 23) dépasse une valeur de résistance prédéfinie, cela permet de conclure sans ambiguïté à un défaut électrique dudit au moins un capteur (21, 22, 23),
**qu'**une unité électrique (13) reliée au dispositif de détection (11), sous la forme d'une unité de commande (13), est disposée sur le corps de support (12),
**que** le dispositif de détection (11) et l'unité électrique (13) sont fixés par complémentarité de forme et/ou par adhérence au corps de support (12),
et **que** l'unité modulaire (10) est conçue comme un module (10) pouvant être manipulé individuellement, de telle sorte que l'unité modulaire (10) puisse être fixée au véhicule automobile (2).

2. Unité modulaire (10) selon la revendication 1,
**caractérisée en ce**
**que** le dispositif de détection (11) comporte au moins un premier (21) et un deuxième capteur (22), les capteurs (21, 22) présentant des zones de détection différentes (5, 6), les zones de détection différentes (5, 6) étant notamment de tailles différentes.

3. Unité modulaire (10) selon l'une des revendications précédentes,
**caractérisée en ce**
**que** des éléments de fixation (14) sont prévus, qui servent à la fixation sur le véhicule automobile (2), en ce que le corps de support (12) peut être fixé sur le véhicule automobile (2) par complémentarité de forme, par adhérence et/ou par liaison de matière, le corps de support (12) pouvant notamment être fixé au véhicule automobile (2) par un assemblage à encliquetage ou être emboîté dans le véhicule automobile (2).

4. Unité modulaire (10) selon l'une des revendications précédentes,
**caractérisée en ce**
**que** le capteur (21, 22, 23) présente une extension allongée, le capteur (21, 22, 23) étant notamment réalisé de manière flexible.

5. Unité modulaire (10) selon l'une des revendications précédentes,
**caractérisée en ce**
**que** le dispositif de détection (11) présente une extension qui peut être orientée dans le sens de la largeur et/ou dans le sens de la longueur du véhicule automobile (2), les capteurs (21, 22, 23) s'étendant essentiellement parallèlement les uns aux autres.

6. Unité modulaire (10) selon l'une des revendications précédentes,
**caractérisée en ce**
**que** des moyens de positionnement (17) sont prévus pour garantir une fixation univoque du corps de support (12) sur le véhicule automobile (2).

7. Unité modulaire (10) selon l'une des revendications précédentes,
**caractérisée en ce**
**que** le corps de support (12) comporte un boîtier (24) dans lequel se trouve l'unité électrique (13), notamment un élément de couvercle (25) fermant de manière étanche le boîtier (24).

8. Unité modulaire (10) selon l'une des revendications précédentes,
**caractérisée en ce**
**que** l'unité électrique (13) est conçue pour transmettre sans fil des signaux à une unité électrique principale (27) du véhicule automobile.

9. Unité modulaire (10) selon l'une des revendications précédentes,
**caractérisée en ce**
**que** ledit au moins un capteur (21, 22, 23) peut être disposé entre le corps de support (12) et le composant côté véhicule, le corps de support (12) étant conçu avec un profil (30) pouvant être orienté vers le composant côté véhicule et offrant audit au moins un capteur (21, 22, 23) une position de montage déterminée, qui peut notamment être étanchée vers l'extérieur.

10. Procédé d'actionnement d'une pièce mobile (1, 33) d'un véhicule automobile, en particulier d'un volet (1), comprenant une unité modulaire (10) qui comporte un corps de support (12) sur lequel est disposé un dispositif de détection (11) comprenant au moins un capteur (21, 22, 23) afin de permettre la détection (3) d'un objet ou d'un utilisateur (4) dans au moins une zone de détection (5, 6, 40) adjacente au véhicule automobile (2) de manière à ce que la détection (3) permette d'activer l'actionnement de la partie mobile (1, 33), un processus d'authentification (31) étant prévu pour vérifier dans quelle mesure l'objet ou l'utilisateur (4) est autorisé à actionner la partie mobile (1, 33),
le processus d'authentification (31) ayant lieu avant la détection (3), après la détection (3) et/ou pendant la détection (3),
**caractérisé en ce**
**que** ledit au moins un capteur (21, 22, 23) est conçu comme un capteur capacitif,
**que** ledit au moins un capteur (21, 22, 23) est configuré en forme de boucle ou en forme de U, de sorte que le raccord d'entrée et le raccord de sortie dudit au moins un capteur (21, 22, 23) sont disposés l'un à côté de l'autre,
**qu'**un module de contrôle (26) est prévu, qui contrôle le fonctionnement du dispositif de détection (11), le module de contrôle (26) se trouvant à proximité dudit au moins un capteur (21, 22, 23), et le module de contrôle (26) étant fixé au corps de support (12),
**que** ledit au moins un capteur (21, 22, 23) est conçu comme un conducteur continu et ne présente donc pas d'extrémité terminale, de sorte que la résistance totale dudit au moins un capteur (21, 22, 23) est mesurée de manière univoque par le module de contrôle (26), et lorsque cette résistance totale dudit au moins un capteur (21, 22, 23) dépasse une valeur de résistance prédéfinie, cela permet de conclure sans ambiguïté à un défaut électrique dudit au moins un capteur (21, 22, 23),
**qu'**une unité électrique (13) reliée au dispositif de détection (11), sous la forme d'une unité de commande (13), est disposée sur le corps de support (12),
**que** le dispositif de détection (11) et l'unité électrique (13) sont fixés par complémentarité de forme et/ou par adhérence au corps de support (12),
et **que** l'unité modulaire (10) est conçue comme un module (10) pouvant être manipulé individuellement, de telle sorte que l'unité modulaire (10) est fixée au véhicule automobile (2).

11. Procédé selon la revendication 10, par lequel une unité modulaire (10) selon l'une des revendications 1 à 9 peut être actionnée.
